# EUROPÄISCHE PATENTSCHRIFT

(11) **EP 2 744 766 B1**
(45) Veröffentlichungstag und Bekanntmachung des Hinweises auf die Patenterteilung: **17.08.2016**
(21) Anmeldenummer: 12735471.0
(22) Anmeldetag: 16.07.2012
(51) Int. Cl.: C04B 7/32, C04B 7/345, C04B 28/06, C04B 7/13, C04B 7/153, C04B 7/24

(54) **CALCIUMSULFOALUMINATZEMENT ODER -KLINKER ENTHALTEND TERNESIT**
CALCIUMSULFOALUMINATE CEMENT OR CLINKER COMPRISING TERNESITE
CIMENT OU CLINKER DE SULFOALUMINATE DE CALCIUM COMPRENANT DU TERNESITE

(30) Priorität: 18.08.2011 EP 11006757; 26.10.2011 EP 11008570; 05.03.2012 EP 12001488; 26.03.2012 EP 12002111; 30.03.2012 EP 12002342; 10.05.2012 EP 12003718
(43) Veröffentlichungstag der Anmeldung: 25.06.2014
(73) Patentinhaber: HeidelbergCement AG, 69120 Heidelberg (DE)
(72) Erfinder: BULLERJAHN, Frank, 69181 Leimen (DE); SCHMITT, Dirk, 69181 Leimen (DE); BEN HAHA, Mohsen, 69117 Heidelberg (DE); BATOG, Barbara, 34-480 Jablonka (PL); ZAJAC, Maciej, 69181 Leimen (DE)
(74) Vertreter: Wagner, Jutta
(86) Internationale Anmeldenummer: PCT/EP2012/002975
(87) Internationale Veröffentlichungsnummer: WO 2013/023728

(56) Entgegenhaltungen:
- EP-A1- 1 171 398
- FR-A1- 2 901 270
- SHERMAN N ET AL: "Long-term behaviour of hydraulic binders based on calcium sulfoaluminate and calcium sulfosilicate", CEMENT AND CONCRETE RESEARCH, PERGAMON PRESS, ELMSFORD, NY, US, Bd. 25, Nr. 1, 1. Januar 1995 (1995-01-01) , Seiten 113-126, XP002665884, ISSN: 0008-8846
- BERETKA J ET AL: "Influence of C4A3S~ content and W/S ratio on the performance of calcium sulfoaluminate-based cements", CEMENT AND CONCRETE RESEARCH, PERGAMON PRESS, ELMSFORD, NY, US, Bd. 26, Nr. 11, 1. November 1996 (1996-11-01), Seiten 1673-1681, XP002320780, ISSN: 0008-8846, DOI: 10.1016/S0008-8846(96)00164-0
- MARROCCOLI M ET AL: "Synthesis of Caclium Sulfoaluminate Cements From Al2O3-Rich By-products From Aluminium Manufacture", 2ND INTERNATIONAL CONFERENCE ON SUSTAINABLE CONSTRUCTION MATERIALS AND TECHNOLOGIES 28TH-30TH JUNE 2010; UNIVERSITÀ POLITECNICA DELLE MARCHE, ANCONA, ITALY, , Nr. 2TH 28. Juni 2010 (2010-06-28), Seiten 1-9, XP002645670, Gefunden im Internet: URL:http://www.claisse.info/2010%20papers/ l61.pdf [gefunden am 2011-06-28] in der Anmeldung erwähnt
- KURDOWSKI W ET AL: "Mineral Composition of Build-up in Cement Kiln Preheater", JOURNAL OF THERMAL ANALYSIS AND CALORIMETRY, KLUWER ACADEMIC PUBLISHERS, DORDRECHT, NL, Bd. 55, Nr. 3, 1. März 1999 (1999-03-01), Seiten 1021-1029, XP019252787, ISSN: 1572-8943
- E. IRRAN ET AL: "Ternesit, Ca5(SiO4)2SO4, ein neues Mineral vom Ettringer Bellerberg, Eifel, Deutschland", MINERALOGY AND PETROLOGY, Bd. 60, Nr. 1-2, 1. Januar 1997 (1997-01-01), Seiten 121-132, XP055030231, ISSN: 0930-0708, DOI: 10.1007/BF01163138

## Beschreibung

Die vorliegende Erfindung betrifft einen Ternesit-Belit-Calciumsulfoaluminat-Klinker, -Zement und -Bindemittel, sowie den Einsatz von Ternesit als Additiv zu Calciumsulfoaluminat(ferrit)(Belit)-Klinker (CSA(F)(B)), -zement, und Bindemitteln.

Die Zementindustrie hat einen erheblichen Anteil an der globalen CO₂-Produktion. Die weltweit wachsende Nachfrage nach Zement vor allem in Entwicklungsländern sowie steigende Kosten für Rohstoffe, Energie und CO₂-Zertifikate führten in den letzten Jahren zur zunehmenden Verringerung des Klinkerfaktors, zum Beispiel durch eine Zugabe von Kalksteinmehlen, Flugaschen und granulierten Hüttensanden als Klinkerersatzstoffe. Diese Verwendung von Nebenprodukten und Abfallprodukten anderer Industrien sowie die Entwicklung alternativer Bindemittel rücken zunehmend in den Fokus des politischen, wissenschaftlichen und wirtschaftlichen Interesses.

Weltweit fallen im Zuge der thermischen Abfallbeseitigung / Energiegewinnung, Stahlerzeugung, Edelmetallgewinnung etc., enorme Mengen an Materialien an, die im Folgenden als industrielle Nebenprodukte bezeichnet werden. Je nach Qualität / Zusammensetzung / Anwendungsgebiet können diese teilweise oder vollständig in verschiedenen Prozessen und Produkten wiederverwendet werden, z.B. als Korrektiv zur Klinkerherstellung von Portlandzement, als Additiv für Beton und als Zuschlag für Asphalt und Beton, etc.

Aufgrund verschiedener Faktoren, wie zum Beispiel der fehlenden Gleichmäßigkeit (Chemismus und Mineralogie) und der Schadstoffgehalte (Organik, Schwermetalle, etc...), ist die Verwendung der industriellen Nebenprodukte aber nicht unproblematisch. Unter anderem kann eine sinkende Reaktivität / Qualität von OPC-Klinker bzw. eine mangelnde Raumbeständigkeit von Zementen dazu führen, dass jährlich große Mengen solcher Materialien kostenintensiv deponiert bzw. als Haldenmaterial und Deponiematerial herangezogen werden müssen. Schwierigkeiten können auch bei der Deponierung solcher Materialien auftreten, z.B. können Auslaugungsprozesse zur Kontamination der umliegenden Flächen und Gewässer / Grundwässer führen. Die Verwendung / Aufbereitung industrieller Nebenprodukte stellt daher eine große Herausforderung und eine noch immer nicht gelöste Aufgabe dar. Eine möglichst effiziente und nachhaltige Ressourcennutzung wird zukünftig unverzichtbar sein und besitzt eine globale Relevanz.

Neben der Substitution von Klinker im Zement und von Rohstoffen in der Rohmehlmischung wurde auch versucht, andere hydraulisch härtende Bindemittel zu finden. Hierzu zählen Calciumsulfoaluminatzemente und Zemente mit Belit als Hauptkomponente.

Es werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

### Stand der Technik

Calciumsulfoaluminatzement wird großtechnisch. üblicherweise durch die Sinterung homogenisierter, feinteiliger, natürlicher Rohstoffe, wie Kalkstein, Bauxit, Gips / Halbhydrat / Anhydrit, aluminiumreicher Ton und einer SiO₂-Quelle, in einem Drehrohrofen zwischen 1100 °C - 1350 °C hergestellt und weist einen signifikant unterschiedlichen Chemismus und Phasengehalt im Vergleich zu Portlandzement auf. In Tabelle 1 sind die in Portlandzement (OPC) und Sulfoaluminatzement (BCSAF) vorliegenden Phasen gegenübergestellt. Auch beim Sulfoaluminatzement können verschiedene industrielle Nebenprodukte wie z.B. Hüttensand und Flugaschen dem Rohmehl zugesetzt werden.

**Tabelle 1: Chemismus und Mineralogie von OPC im Vergleich zu BCSA(F)**

| | Temperatur [°C] | Chem. Zusammensetzung [%] | Miner. Zusammensetzung [%] |
|---|---|---|---|
| | | | C₃S [50-70] |
| | | CaO [55-75] | C₂S [10-40] |
| | | SiO₂ [15-25] | C₃A [0-15] |
| OPC | -1450 | Al₂O₃ [2-6] | C₄AF [0-20] |
| | | Fe₂O₃ [0-6] | C$ [2-10] |
| | | SO₃ [1.5-4.5] | C [0-3] |
| | | | Cc [ 0-5 ] |
| | | CaO [40-70] | C₂S [2-70] |
| | | SiO₂ [2-40] | C₄A₃$ [10-75] |
| BCSAF | -1250 | Al₂O₃ [5-40] | C₄AF [0-30] |
| | | Fe₂O₃ [0-15] | C$ [5-30] |
| | | SO₃ [5-25] | Nebenphasen |

Ein entscheidender, hydraulisch aktiver Bestandteil von Calciumsuffoaluminat-Zement ist ein (Misch)Kristall der Verbindungen folgender Zusammensetzung 3 CaO ● 3 Al₂O₃ ● CaSO₄ - 3 CaO ● 3 Fe₂O₃ ● CaSO₄ (C₄A₃$ - C₄F₃$; Sulfoaluminat-Sulfoferrit, Ye'elimit), welcher nach dem Anmachen mit Wasser und in Gegenwart von löslichen Sulfaten und zusätzlichen Calciumträgern zu Ettringit, 3 CaO ● (Al₂O₃ / Fe₂O₃) ● 3 CaSO₄ ● 32 H₂O, sowie verschiedenen Monophasen reagiert. Die sich bildenden (Hydrat)Phasen (z.B. Ettringit [AFₜ], Monophasen [AFₘ] etc.) können eine Vielzahl verschiedener (Schad)Stoffe, durch z.B. den Einbau in die Kristallstruktur der Hydratphase, Anlagerung an Partikeloberflächen, Fixierung im Zementleim, Ausfällung als z.B. Hydroxide / Karbonate, etc., binden und dauerhaft fixieren. Zwei weitere hydraulisch aktive Phasen des Calciumsulfoaluminatzements sind Dicalciumsilicat (C₂S) und Tetracalciumaluminatferrit (C₄AF), welche jedoch vorrangig zur Endfestigkeit beitragen.

EP 0 838 443 A1 beschreibt die Herstellung von Calciumsulfoaluminat - Zement, ausgehend von Aluminium enthaltenden Reststoffen.

DE 196 44 654 A1 beschreibt die Herstellung eines Calciumsulfoaluminat - Zements aus aufbereiteten Salzschlacken.

FR 2 928 643 beschreibt die Herstellung und Zusammensetzung eines Belit-Calciumsulfoaluminat(ferrit) - Klinkers aus einer Mischung mit Mineralen, die Calcium, Aluminium, Silizium, Eisen und Schwefel, vorzugsweise in Form von Sulfat, enthalten. Die Sinterung der Rohmehlmischung erfolgt durch das Durchlaufen eines Brennofens mit einer Durchlaufzeit von mindestens 15 Minuten.

FR 2 946 978 beschreibt die Herstellung und Zusammensetzung eines BelitCalciumsulfoaluminat(ferrit) - Klinkers aus einer Mischung verschiedener Rohstoffe.

Sherman et al. in "Long-term Behaviour of Hydraulic Binders based on Calcium Sulfoaluminate and Calcium Sulfosilicate" offenbaren ein Verfahren zur Herstellung eines hydraulisch reaktiven Klinkers durch Sintern einer Rohmehlmischung aus CaCO₃, Phosphogips, Flugasche, Bauxit, Hochofenschlacke und Ton. Die Rohstoffmischung wird bei ca. 1200°C in einem Elektroofen über einen Zeitraum von 4-8 Stunden gesintert. Der erhaltene Klinker weist eine mineralogische Zusammensetzung enthaltend: C₄A₃$ und C₅S₂$ und C$ im Verhältnis 1:1:0.5. Die Proben FA, BS und CL setzen sich aus C₄A₃$, C₅S₂$ und C$ sowie Nebenphasen von C₃A und C₄AF zusammen und weisen keine ß-C₂S Phase auf. Neben dem C₄A₃$-C₅S₂$-C$-Klinker wird auch ein reiner C₅S₂$-Klinker synthetisiert. Wie aus den Hydratationsversuchen hervorgeht, ist dieser reiner C₅S₂$-Klinker hydraulisch "inaktiv", da er über einen Zeitraum von 2 Jahren keine nennenswerte hydraulische Aktivität.

EP 1 171 398 B1 (DE 600 29 779 T2) beschreibt die Sinterung spezifischer Rohmaterialien bei 900 bis 1200 °C, um im Ofen Spezialklinker zu produzieren, die hohe Konzentrationen an Kristall X = {(C, K, N, M)₄(A, F, Mn, P, T, S)₃(Cl, $)} und Kristall Y = {(C₂S)₃(CS)₃Ca(f, cl)₂} und/oder Kristall Z = {C₅S₂$} aufweisen. Diese Klinker werden mit hydraulischem Zement oder Zement vom Typ Portland gemischt, um fertige Zementzusammensetzungen zu produzieren.

Aufgabe der Erfindung war die Bereitstellung eines verbesserten Calciumsulfoaluminat(ferrit) - Klinkers, - Zements und - Bindemittels, welche weniger negativen Einfluss auf die Umwelt haben, indem industrielle Nebenprodukte einen großen Teil der Rohmehlmischung ausmachen können und/oder dessen Herstellung weniger CO₂ freisetzt.

Es wurde nun überraschend gefunden, dass die Phase C₅S₂$ (Ternesit auch als Sulfospurrit oder Sulfatspurrit bezeichnet) eine signifikant reaktive Komponente in Sulfoaluminatzementen darstellt. In der Literatur (siehe z.B. "Synthesis of Calcium Sulfoaluminate Cements From Al2O3-Rich By-products from Aluminium Manufacture", Milena Marroccoli et al., The second international conference on sustainable construction materials and technologies 2010, "Synthesis of Special Cements from Mixtures Containing Fluidized Bed Combustion Waste, Calcium Carbonate and Various Sources of Alumina", Belz et al, 28th Meeting of the Italian Section of The Combustion Institute 2005, "Fluidized Bed Combustion Waste as a Raw Mix Component for the Manufacture of Calcium Sulphoaluminate Cements", Belz G et al, 29th Meeting of the Italian Section of The Combustion Institute, 2006 und "The Fabrication of Value Added Cement Products from Circulating Fluidized Bed Combustion Ash", Jewell R.B et al, World of Coal Ash (WOCA) Covington, Kentucky, USA, 2007) wird die Phase C₅S₂$ als wenig reaktiv bzw. inert und unerwünscht beschrieben. Des Weiteren werden regelmäßig Methoden aufgezeigt diese "unerwünschte Phase" zu vermeiden. Überraschenderweise hat sich bei unseren Versuchen gezeigt, dass eine signifikante Menge dieser Phase C₅S₂$ schon innerhalb der ersten Tage der Hydratation reagiert und die Phasenzusammensetzung der hydratisierten Proben signifikant beeinflusst.

Die obige Aufgabe wird daher einerseits durch einen Ternesit-Calciumsulfoaluminat-Klinker, -Zement und Bindemittel daraus gelöst. Es wird weiter durch den Zusatz von Ternesit zu Calciumsulfoaluminatzement gelöst, bei dem Ternesit-Klinker durch Sintern einer Rohmehlmischung, die mindestens Quellen für CaO, SiO₂ und SO₃ enthält, erhalten wird, wobei die Sintertemperatur so eingestellt wird, dass der Ternesit-Klinker bezogen auf das Gesamtgewicht des Klinkers mindestens 20 Gew.-% C₅S₂$ enthält. Der Ternesit-Klinker wird, vor oder nach dem Mahlen, mit einem Calciumsulfoaluminat- oder Calciumsulfoaluminat-Belit-Klinker oder -Zement zu einem Bindemittel vermischt.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet. Bindemittel oder Bindemittelmischung bezeichnet ein Zement und typischerweise aber nicht zwingend weitere, fein gemahlene Komponenten enthaltendes, hydraulisch erhärtendes Gemisch, welches nach Zusatz von Wasser, ggfs. Zusatzmitteln und Gesteinskörnung, zur Anwendung gelangt.

Ein Klinker kann bereits alle notwendigen bzw. gewünschten Phasen enthalten und nach Vermahlen zu Zement direkt als Bindemittel zum Einsatz kommen. Erfindungsgemäß wird die Zusammensetzung des Bindemittels durch Vermischen von zwei oder mehreren Klinkern und/oder Zementen erhalten, wobei das Vermischen bereits vor (oder während) dem Mahlen und/oder im gemahlenen Zustand und/oder bei der Herstellung des Bindemittels erfolgt. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Soweit nichts anderes angegeben ist mit "reaktiv" eine hydraulische Reaktivität gemeint.

Phasen, wie zum Beispiel C₅S₂$, werden vorrangig stöchiometrisch angegeben, jedoch kann die genaue Zusammensetzung abweichen/variieren. Des Weiteren können verschiedene Fremdionen aus der Gruppe der Halogene, Nichtmetalle, Alkali- und Erdalkalimetalle, sowie Vertreter der Übergangs- und Halbmetalle und Metalle in die Kristallstruktur der Phase eingebaut werden. Für den erfindungsgemäßen Klinker sind diese alle geeignet. Vorzugsweise wird zum Beispiel Phosphat, Fluorid, Nitrat oder Chlorid in die Struktur von C₅S₂$ eingebaut, wodurch diese stabilisiert wird (z.B. bei höheren Temperaturen > 1200°C). Vorzugsweise kann Phosphat und / oder Eisen in die Phase C₄A₃$ eingebaut werden. Der Fremdioneneinbau kann zu einer erhöhten Bildungsgeschwindigkeit der Phase in der heißen Zone führen, was wiederum potentiell die benötigte Verweildauer verringert und / oder zu ihre quantitativen Zunahme führen kann. Die Bezeichnung Al₂O₃(Fe₂O₃) bedeutet ebenso wie in der Angabe C₄(AₓF₁₋ₓ)₃$ für die Klinkerphase, dass Aluminium teilweise durch Eisen ersetzbar ist, d.h. x ist eine Zahl von 0,1 bis 1,0. Typischerweise liegt hauptsächlich Aluminium mit geringen Beimengungen von Eisen vor, es liegt aber im Rahmen der Erfindung erhebliche Mengen Eisen bis hin zu einem überwiegenden Gehalt an Eisen einzusetzen.

Als Mineralisatoren werden Stoffe bezeichnet, welche als Flussmittel wirken und/oder die Temperatur senken, die zur Bildung einer Schmelze notwendig ist, und /oder solche, die die Bildung der Klinkerverbindung fördern, wie zum Beispiel durch Mischkristallbildung und/oder Phasenstabilisierung.

Ein Nachweis für den Einbau von Eisen ist die quantitative Abnahme eisenreicher Phasen (z.B. Fe₃O₄, C₂F und C₄AF), die Zunahme der Phase C₄A₃$ bzw. C₄(AₓFe₍₁₋ₓ₎)₃$, sowie die Zunahme der Peakintensitäten und des Gitterparameters c (A) [Kristallsystem: Orthorhombisch] von 9,1610 [PDF-Nummer: 01-085-2210, Tetracalcium hexaaluminate sulfate(VI) - Ca₄ (Al₆O₁₂)(SO₄), ICSD Collection Kode: 080361, Calculated from ICSD using POWD-12++, (1997), Struktur: Calos, N.J., Kennard, C.H.L., Whittaker, A.K., Davis, R.L., J. Solid State Chem., 119, 1, (1995)] über 9,1784 [PDF-Nummer: 00-051-0162, Calcium Aluminum Iron Oxide Sulfate - Ca₄((Al_{0.95}Fe_{0.05}))₆O₁₂(SO₄), ICSD Collection Kode: -, Primärer Verweis: Schmidt, R., Pöllmann, H., Martin-Luther-Univ., Halle, Germany., ICDD Grant-in-Aid, (1999)] bis zu Werten von über 9,2000. Die Prüfung auf eine etwaige Mischkristallbildung kann ebenfalls mittels der Bestimmung der Besetzungsfaktoren bei einer Rietveld-Anpassungen durch Unter- oder Gemischtbesetzungen einzelner Atomlagen ermittelt werden. Ein weiterer rein qualitativer Indikator ist die zum Teil deutliche Farbveränderung der Klinker. So ändert sich die Farbe der Klinker von einem Kastanien- / Ockerbraun über Grünbraun bis hin zu einem hellen Grauton.

C₅S₂$ kann durch Sinterung von Rohstoffen, welche ausreichende Mengen CaO, SiO₂ und SO₃ bereitstellen, hergestellt werden. Dabei eignen sich einerseits reine bzw. im Wesentlichen reine Rohstoffe wie Calciumcarbonat oder -oxid, Quarzmehl oder Microsilica, und Calciumsulfat. Andererseits kann eine Vielzahl natürliche aber auch industrielle Materialien, wie zum Beispiel, aber nicht ausschließlich, Kalkstein, Bauxit, Ton / Tonstein, kalzinierte Tone (z. B. Metakaolin), Basalte, Periodite, Dunite, Ignimbrite, Karbonatite, Aschen / Schlacken / Hüttensande hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Rohmaterial verwendet werden. Es fallen ebenfalls namentlich nicht genannte Stoffe / Stoffgruppen in den Schutzbereich, welche die chemischen Mindestanforderungen als potentielle Rohstoffe erfüllen. Die Rohstoffe können, müssen aber nicht, vorbehandelt werden.

Ternesit kommt auch als Mineral vor, jedoch sind keine Lagerstätten bekannt, aus denen es in ausreichender Menge bzw. Reinheit gewonnen werden kann, so dass der Einsatz von "natürlichem" Ternesit zwar möglich, in der Praxis aber unwirtschaftlich ist. Eine Herstellung durch Sinterung geeigneter Rohstoffe ist erfindungsgemäß vorzuziehen.

In einer Ausführungsform wird Ternesit-Calciumsulfoaluminat-Klinker durch ein spezielles Verfahren aus Rohstoffen, welche zumindest Quellen für CaO, Al₂O₃(±Fe₂O₃), SiO₂ und SO₃ durch Brennen und anschließendes Tempern hergestellt.

Das Verfahren zur Herstellung eines hydraulisch reaktiven Klinkers durch Sintern einer Rohmehlmischung, welche Quellen für CaO, Al₂O₃(Fe₂O₃), SiO₂ und SO₃ enthält, umfasst zunächst als ersten Schritt eine Umsetzung bzw. Sinterung der Rohmehlmischung in einem Temperaturbereich von > 1200 °C bis 1350 °C, vorzugsweise von 1250 bis 1300 °C, über einen Zeitraum, der ausreicht, um ein Klinkerzwischenprodukt zu erhalten. Typischerweise beträgt der Zeitraum 10 min bis 240 min, vorzugsweise 30 min bis 90 min. Das Klinkerzwischenprodukt wird dann in einem Temperaturbereich von 1200 °C bis zu einer unteren Grenze von 750 °C, vorzugsweise in einem Temperaturbereich von 1150 bis 850 °C, über eine Zeit getempert, die ausreicht, um die gewünschte Menge an C₅S₂$ zu erhalten, sowie eine gewisse Menge an Aluminat- und Ferratphasen und Reste der kristallinen Hochtemperaturphasen der Rohstoffe mit vorhandenem C$ zu zusätzlichem C₄(AₓF₁₋ₓ)₃$ und C₅S₂$ umzusetzen. Der Klinker sollte den Temperaturbereich zwischen 1200°C und 1050°C für einen Zeitraum von 10 min bis 180 min, vorzugsweise von 25 min bis 120 min und noch stärker bevorzugt von 30 min bis 60 min durchlaufen. Der Klinker kann während der Abkühlung den Bereich von 1050°C bis 750°C, vorzugsweise von 1050°C bis 850°C für einem Zeitraum von 5 min bis 120 min, vorzugsweise von 10 min bis 60 min durchlaufen. Abschließend wird der Klinker in an sich bekannter Weise rapide abgekühlt, so dass weitere Phasenumwandlungen verhindert werden. Das Verfahren ist in EP11006757.6 ausführlich beschrieben, auf die hierfür in vollem Umfang Bezug genommen wird.

Man erhält dadurch den erfindungsgemäßen Ternesit-Calciumsulfoaluminat-Klinker mit den Hauptkomponenten C₄(AₓF₁₋ₓ)₃$, (α; β) C₂S, C₂(A_{y}F_{(1-y)}) und C₅S₂$ in folgenden Anteilen
- C₅S₂$ 5 bis 75 Gew.-%, bevorzugt von 10 bis 60 Gew.-% und noch stärker bevorzugt von 20 bis 40 Gew.-%
- C₂S 1 bis 80 Gew.-%, bevorzugt von 5 bis 70, noch stärker bevorzugt von 10 bis 65 Gew.-% und am meisten bevorzugt von 20 bis 50 Gew.-%
- C₄(AₓF₁₋ₓ)₃$ 5 bis 70 Gew.-%, bevorzugt von 10 bits 60 Gew.-% und noch stärker bevorzugt von 20 bis 45 Gew.-%
- C₂(A_{y}F_{(i-y)}) 5 bis 30 Gew.-%, bevorzugt von 8 bis 25 Gew.-% und noch stärker bevorzugt von 10 bis 20 Gew.-%
- Nebenphasen 0 bis 30 Gew.-%, bevorzugt 5 bis 25 Gew.-% und noch stärker bevorzugt von 10 bis 20 Gew.-%
mit x im Bereich von 0,1 bis 1, vorzugsweise im Bereich von 0,8 bis 0,95, und y im Bereich von 0,2 bis 0,8, vorzugsweise im Bereich von 0,4 bis 0,6.

Als Nebenphasen können z.B. Kalziumsilikate, Sulfate, Kalziumaluminate, Spinelle, Vertreter der Melilith-Gruppe, Periklas, Freikalk, Quarz, Olivine, Pyroxene, Vertreter der Merwinit-Gruppe, Apatite, Ellestadite, Silicocarnotit Spurrit und/oder eine Glasphase auftreten. Der Freikalkgehalt des Klinkers liegt vorzugsweise unter 5 Gew.-%, besonders bevorzugt unter 2 Gew.-% und ganz besonders bevorzugt unter 1 Gew.-%. In einer bevorzugten Ausführungsform enthält der Ternesitklinker 1 bis 10 Gew.-%, vorzugsweise 2 bis 8 Gew.-% und noch stärker bevorzugt 3 bis 5 Gew.-% einer röntgenamorphen Phase / einer Glasphase.

Vorzugsweise liegen die Gewichtsverhältnisse der wichtigsten Phasen des erfindungsgemäßen Klinkers (C₄(AₓF₁₋ₓ)₃$, (α; β)C₂S, C₅S₂$) in folgenden Bereichen:
- C₄(AₓF₁₋ₓ)₃$ zu (α; β)C₂S = 1:16 - 70:1, bevorzugt 1:8 - 8:1 und besonders bevorzugt 1:5 - 5:1
- C₄(AₓF₁₋ₓ)₃$ zu C₅S₂$ = 1:15 - 14:1, bevorzugt 1:8-8:1 und besonders bevorzugt 1:5- 5:1
- C₅S₂$ zu (α; β)C₂S = 1:15 - 70:1, bevorzugt 1:8- 10:1 und besonders bevorzugt 1:4- 5:1
- C₄(AₓF₁₋ₓ)₃$ zu ((α; β)C₂S + C₅S₂$) = 1:16 - 10:1 1, bevorzugt 1:8 - 8:1 und besonders bevorzugt 1:4- 4:1

Der erfindungsgemäße Ternesit-Calciumsulfoaluminat-Klinker kann in seinen Eigenschaften und seiner Zusammensetzung durch die Rohmehlzusammensetzung, die Gehalte an Korrektiven, die Brennbedingungen und die Regelung der Temperung / Vorkühlung so eingestellt werden, dass C₅S₂$ und anstelle von β-C₂S reaktive Modifikationen von C₂S, wie zum Beispiel α-Modifikationen, vermehrt auftreten. Die Rohmehlmischung muss eine Temperatur von mehr als 1200°C durchlaufen, so dass etwaige unerwünschte kristalline Hochtemperaturphasen (z.B. C₂AS) in gewünschte Phasen des Zielklinkers umgesetzt werden und eine ausreichende Menge C₄(AₓFe₁₋ₓ)₃$ gebildet wird. Jedoch geht damit ein wesentlicher Nachteil einher. Die gewünschte Phase C₅S₂$ ist ab einer Temperatur von über ±1180°C nicht stabil und zerfällt in C₂S und C$. Daher wird die Sinterung bei über 1200 °C mit einer gezielten, gegenüber der üblichen Zeit verlangsamten Kühlung des Klinkers über einen Bereich von 1200°C bis 750°C, vorzugsweise von 1150°C bis 850°C und noch stärker bevorzugt von 1150°C, bis 1080°C, kombiniert, um C₅S₂$ neben der Phase C₄(AₓFe₁₋ₓ)₃$ gezielt zu bilden. Überraschenderweise hat sich ein weiterer Vorteil dieses Temper-Verfahrens gezeigt. Durchläuft die Phase C₄(AₓFe₁₋ₓ)₃$ (gebildet bei mindestens über 1200°C) gezielt einen Bereich von 1150°C bis 1050°C, wird diese, durch die Konsumierung / Umwandlung von zum Beispiel C₄AF, C₂F, CF messbar eisenreicher und ihre Menge nimmt etwas zu.

Die Gehalte der Hauptoxide des Klinkers umfassen bevorzugt folgende Bereiche:
- CaO 35 bis 65 Gew.-%
- Al₂O₃(Fe₂O₃) 7 bis 45 Gew.-%
- SiO₂ 5 bis 28 Gew.-%
- SO₃ 5 bis 20 Gew.-%.

Es ist von Vorteil, wenn der erfindungsgemäße Klinker einen Periklasgehalt von > 2 Gew.-% aufweist. Außerdem kann der Klinker ein oder mehrere sekundäre Elemente und / oder deren Verbindungen aus der Gruppe der Alkali- und Erdalkalimetalle und / oder der Übergangsmetalle und / oder Metalle und / oder der Halbmetalle und / oder der Nichtmetalle in einem Anteil von bis zu 20 Gew.-%, vorzugsweise von ≤ 15 Gew.-% und besonders bevorzugt von ≤ 10 Gew.-%, enthalten.

Alternativ kann ein Ternesit-Klinker mit einem Gehalt an C₅S₂$ im Bereich von 20 bis 100 Gew.-% und einem Gehalt an C₄(AₓFe₁₋ₓ)₃$ unter 15 Gew.-% erzeugt werden. Die separate Herstellung von Ternesit oder einem Klinker bzw. Zement mit Ternesit als mindestens einer der Hauptkomponenten hat den Vorteil, dass Ternesit bzw. dieser Klinker in einem Schritt in einem Temperaturbereich von typischerweise 900 bis 1200°C, vorzugsweise 1050 bis 1150°C hergestellt werde kann. Bei diesen im Vergleich zu denen bei der Herstellung von Ye'elimit als Hauptphase enthaltenden Klinkern niedrigen Brenntemperaturen ergibt sich des weiteren der Vorteil, dass in dem erfindungsgemäßen Klinker gezielt erhöhte Magnesium / Periklas-Gehalte (> 2 Gew.-%) eingestellt werden können. Aufgrund der geringen Brenntemperatur kann Periklas in einer reaktiven Form vorliegen und zur Festigkeitsentwicklung / Hydratation beitragen. Aber auch höhere Brenntemperaturen sind je nach Rohstoffmischung brauchbar, sofern Ternesit in hohen Anteilen gebildet wird, bevorzugt sind 20 bis 100 % des Klinkers.

Soll die Herstellung möglichst reines C₅S₂$ ergeben, werden Rohstoffe gewählt, welche neben Quellen für CaO, SiO₂ und SO₃ keine oder nur wenig weitere Bestandteile enthalten. Die Umsetzung von Calciumcarbonat mit Quarzmehl und Calciumsulfat im Temperaturbereich von 900 bis 1200 °C, vorzugsweise 1050 bis 1150 °C ergibt C₅S₂$ mit einer Reinheit von > 99 %.

Es ist jedoch bevorzugt, wenn zur Herstellung von C₅S₂$ ein möglichst hoher Anteil kostengünstiger und umweltverträglicher Rohstoffe zum Einsatz kommt. Umweltverträglich meint hierbei einen möglichst geringen Energieeinsatz und/oder die Schonung natürlicher Rohstoffe bzw. hochwertiger Abfall- und Nebenprodukte.

Eine Umsetzung von etwa 25% der Flugasche FA2 (siehe Beispiele) mit etwa 45% Kalkstein K1, etwa 8% Quarz (Merck, p.a.) und etwa 20 % MicroA (natürlicher Anhydrit) ergab einen Klinker mit einem C₅S₂$ Gehalt von > 70 % und bei Umsetzung von ∼8% Metakaolin, ∼58% K1, ∼23% Micro A und ∼10% SiO₂ wurden Reinheiten von > 80 % erreicht.

Die Umsetzung dieser Rohstoffe erfolgt bevorzugt ebenfalls im Temperaturbereich von 900 bis 1200 °C, vorzugsweise 1050 bis 1150 °C. Hierbei wird, im Gegensatz zur bekannten Sinterung derselben Rohstoffe mit dem Ziel der Bildung von C₄A₃$ bei mindestens 1200 °C, im wesentlichen Ternesit gebildet. Je nach Rohstoffzusammensetzung können auch höhere Temperaturen von z.B. bis 1300 °C geeignet sein, beispielsweise, wenn relevante Mengen Phosphor enthalten sind, wie es bei einer Verwendung von Phosphorgips der Fall ist. Im Unterschied zu den bekannten Verfahren/Klinkern steht erfindungsgemäß jedoch die Bildung von Ternesit im Fokus, die Sintertemperatur wird daher für dessen Bildung optimiert. Im Stand der Technik wurde dagegen die Sintertemperatur für die Bildung von C₄A₃$ optimiert, Ternesit sollte möglichst nicht gebildet werden. Demgegenüber wird erfindungsgemäß die Temperatur so gewählt, dass möglichst viel Ternesit gebildet wird und, sofern die Rohstoffe Quellen für Al₂O3 bzw. Fe₂O₃ enthalten, der Gehalt an C₄(AₓF(₁₋ₓ)₃$ auf weniger als 15 % begrenzt wird. Zwar könnten auch Klinker mit mehr C₄(AₓF(₁₋ₓ)₃$ verwendet werden, aber ein höherer Gehalt davon geht zu Lasten von Ternesit und die entsprechend höhere Sintertemperatur kann auch die Reaktivität von Ternesit beeinträchtigen.

Der Temperaturbereich von 900°C bis 1300°C, vorzugsweise von 1050°C bis 1150°C, sollte für einen Zeitraum von 10 min bis 180 min, vorzugsweise von 25 min bis 120 min und noch stärker bevorzugt von 30 min bis 60 min durchlaufen werden. Der Klinker kann zur weiteren Bildung gewünschter Phasen während der Abkühlung den Bereich von 900°C bis 750°C für einen Zeitraum von 5 min bis 120 min, vorzugsweise von 10 min bis 60 min durchlaufen. Abschließend oder aber auch ohne eine verzögerte Abkühlung, durch den Bereich von 900° bis 750°C, wird der Klinker in an sich bekannter Weise rapide abgekühlt, so dass weitere Phasenumwandlungen verhindert werden.

Klinker mit Ternesit als Hauptkomponente ohne nennenswerte Mengen Ye'elimit sind bisher stets vermieden worden und daher neu und Gegenstand der vorliegenden Erfindung, ebenso wie ihre Verwendung als Additiv in Calciumsulfoaluminat(ferrit) - Zement und - Bindemittel.

Der C₅S₂$ als Hauptkomponente enthaltende Ternesit-Klinker bzw. ein daraus durch Mahlen ohne Zusätze erhaltener Zement enthält erfindungsgemäß die folgenden Komponenten in den angegebenen Anteilen:
- C₅S₂$ 20 bis 100 Gew.-%,
   bevorzugt 30 bis 95 Gew.-% und noch stärker bevorzugt 40 bis 90 Gew.-%
- (α, β) C₂S 0 bis 80 Gew.-%,
   bevorzugt 5 bis 70 Gew.-% und noch stärker bevorzugt 10 bis 60 Gew.-%
- C₄(AₓF₍₁₋ₓ₎)₃$ 0 bis < 15 Gew.%,
   bevorzugt 3 bis 12 Gew.-% und noch stärker bevorzugt 5 bis 10 Gew.-%
- C₂(A_{y}F_{(1-y)}) 0 bis 30 Gew.-%,
   bevorzugt 5 bis 20 Gew.-% und noch stärker bevorzugt 8 bis 15 Gew.-%
- Reaktive Aluminate 0 bis 20 Gew.-%,
   bevorzugt 1 bis 15 Gew.-% und noch stärker bevorzugt 3 bis 10 gew.-%
- Periklas (M) 0 bis 25 Gew.-%,
   bevorzugt 1 bis 15 Gew.-% und noch stärker bevorzugt 2 bis 10 Gew.-%
- Nebenphasen 0 bis 30 Gew.-%,
   bevorzugt 3 bis 20 Gew.-% und noch stärker bevorzugt 5 bis 10 Gew.-% bezogen auf die gesamte Menge an Klinker/Zement, wobei sich die Anteile der Phasen zu 100% addieren.

Durch die Zugabe von Mineralisatoren zum Rohmehl kann neben der Stabilisierung des Ternesit insbesondere ein Teil, bis hin zum überwiegenden Teil, des Dicalciumsilikates in Form von dotiertem "α" C₂S, wie zum Beispiel in Gegenwart von P₂O₅ als Calcium-Phosphat-Silikat [Ca₂SiO₄ - 0.05Ca₃(PO₄)₂], vorkommen. Solche Verbindungen fallen ebenfalls in die Gruppe der reaktiven α C₂S Polymorphe und den Schutzbereich der vorliegenden Erfindung.

Die Angabe (α, β) C₂S bedeutet, dass es sich um Polymorphe von C₂S und deren Gemische handeln kann, wobei die reaktiven α Polymorphe (z.B. α, α'_{L}, α'_{H}) bevorzugt werden. Vorzugsweise sind mindestens 5 Gew.-% α Polymorphe von C₂S enthalten, da diese vorteilhaft zu einer hohen Frühfestigkeit beitragen.

Bei der Phase C₄(AₓF(₁₋ₓ₎)₃$ liegt x im Bereich von 0,1 bis 1, vorzugsweise von 0,8 bis 0,95. Bei der Phase C₂(A_{y}F_{(1-y)}) liegt y im Bereich von 0,2 bis 0,8 und vorzugsweise im Bereich von 0,4 bis 0,6.

Unter reaktiven Aluminaten sind zum Beispiel, aber nicht ausschließlich, C₃A, CA und C₁₂A₇ zu verstehen.

Als Nebenphasen können zum Beispiel, aber nicht ausschließlich, Alkali/Erdalkali-Sulfate, Quarze, Spinelle, Olivine, Pyroxene, Vertreter der Melilith- und Merwinit-Gruppe, Apatite, Ellestadite, Silicocarnotit, Freikalk, Spurrit, Quarz und/oder ein röntgenamorpher Phasenbestand / eine Glasphase, in einem Anteil von 0 Gew.-% bis 30 Gew.-%, vorzugsweise von 2 Gew.-% bis 20 Gew.-% und besonders bevorzugt von 5 Gew.-% bis 15 Gew.-% auftreten. Der Freikalkgehalt des Klinkers liegt unter 5 Gew.-%, vorzugsweise unter 2 Gew.-% und besonders bevorzugt unter 1 Gew.-%.

Die Gehalte der Hauptoxide eines C₅S₂$ als Hauptphase enthaltenden, separat hergestellten Ternesit-Klinkers umfassen folgende Bereiche:
- CaO 40 bis 70 Gew.-%, bevorzugt 45 bis 60 Gew.-% und noch stärker bevorzugt 50 bis 55 Gew.-%
- SiO₂ 5 bis 30 Gew.-%, bevorzugt 10 bis 25 Gew.-% und noch stärker bevorzugt 15 bis 23 Gew.-%
- SO₃ 3 bis 30 Gew.-%, bevorzugt 5 bis 26 Gew.-% und noch stärker bevorzugt 8 bis 22 Gew.-%
- Σ(Al₂O₃+Fe₂O₃) 0 bis 40 Gew.-%, bevorzugt 5 bis 30 Gew.-% und noch stärker bevorzugt 8 bis 20 Gew.-%
- MgO 0 bis 25 Gew.-%, bevorzugt 2 bis 15 Gew.-% und noch stärker bevorzugt 5 bis 10 Gew.-%
bezogen auf die gesamte Menge an Klinker/Zement, wobei sich die Anteile der Gehalte zu 100% addieren.

Die Rohstoffe für die Herstellung des erfindungsgemäßen Ternesit-Calciumsulfo-aluminat-Klinkers oder Ternesit-Klinkers werden in an sich bekannter Weise auf übliche Feinheiten gemahlen. Feinheiten von 2000 bis 10000 cm²/g, vorzugsweise im Bereich von 3000 bis 6000 cm²/g und besonders bevorzugt von 4000 bis 5000 cm²/g sind besonders gut geeignet. Die Mahlfeinheit richtet sich in erster Linie nach der Art und Zusammensetzung des eingesetzten Rohstoffes, dem Brennprozess (Temperatur, Verweildauer in der Sinterzone, etc.) sowie den angestrebten Eigenschaften des Bindemittels und den zur Verfügung stehenden technischen Möglichkeiten.

Das erfindungsgemäße Bindemittel und/oder der erfindungsgemäße Zement umfasst als Hauptphasen zumindest C₅S₂$ und C₄(AₓF₍₁₋ₓ₎)₃$, mit x von 0,1 bis 1, vorzugsweise von 0,8 bis 0,95, sowie vorzugsweise auch C₂(A_{y}F_{(1-y)}), mit y von 0,2 bis 0,8, vorzugsweise von 0,4 bis 0,6 und reaktive Polymorphe von C₂S. Typischerweise enthält das Bindemittel außerdem Anhydrit und kann Calciumferrit (z.B. C₂F), und/oder Aluminiumsilikate C₂AS, CAS₂, Tricalciumsilikat und Freikalk enthalten. Bevorzugt enthält das Bindemittel außerdem Zusatzmittel und/oder Zusatzstoffe sowie ggfs. weitere hydraulisch aktive Komponenten. Bei den Zusatzstoffen kann es sich um latent hydraulische, puzzolanische und/oder nicht hydraulisch aktive (z.B. gemahlener Kalkstein / Dolomit, gefälltes CaCO₃, Mg(OH)₂,Ca(OH)₂, Aluminiumhydroxide [z.B. amorphes Al(OH)₃], lösliche Alkali-Aluminate [z.B. Na₂Al₂O₄], Silica Fume) Komponenten handeln.

Zement und Bindemittel können durch Zumischen von Ternesit-Klinker zu Calciumsulofaluminat(Ferrit) (Belit) - Klinker, Zement oder - Bindemittel oder durch Mahlung des Ternesit-Cacliumsulfoaluminat-Klinkers und ggfs. Zumischen weiterer Komponenten erhalten werden.

Das erfindungsgemäße Bindemittel aus dem Ternesit-Klinker wird durch die Kombination eines Calciumsulfoaluminat(ferrit)(Belit) - Klinkers (CSA(F)(B)) oder - Zements mit einem Gehalt der reaktiven Phase C₄(AₓF₁₋ₓ)₃$ von 10 bis 80 Gew.-% (mit x von 1 bis 0,1) mit einem Klinker und/oder Zement, enthaltend von 20 bis 100 Gew.-% C₅S₂$ zu einem Zement / Bindemittel erhalten. Die mindestens zwei Komponenten liegen dabei in folgenden Anteilen vor:
- Klinker oder Zement enthaltend CSA(F)(B) 10 bis 90 Gew.-%, bevorzugt 20 bis 70 Gew.-% und noch stärker bevorzugt 30 bis 60 Gew.-%
- Klinker oder Zement enthaltend C₅S₂$ 10 bis 90 Gew.-%, bevorzugt 30 bis 80 Gew.-% und noch stärker bevorzugt 40 bis 70 Gew.%.
Die Anteile sind bezogen auf die gesamte Menge an Bindemittel, wobei sich die Anteile zu 100% addieren.

Der Ternesit-Klinker mit der Hauptphase C₅S₂$ kann bei geeigneter Zusammensetzung, wie zum Beispiel, aber nicht ausschließlich, durch erhöhte Gehalte an reaktiven Aluminaten und Ferraten, als eigenständiges Bindemittel eingesetzt werden. Es ist jedoch vorteilhafter diesen mit CSA(F)(B) Klinkern und Zementen zu Bindemitteln mit optimierter Zusammensetzung zu kombinieren.

Der Ternesit-Calciumsulfoaluminat-Klinker bzw. der Ternesit-Klinker wird zur Herstellung von Zement bzw. Bindemittelmischungen in an sich bekannter Weise mit oder ohne Sulfatträger auf übliche Zementfeinheiten (nach Blaine) von 2000 bis 10000 cm²/g, vorzugsweise von 3000 bis 6000 cm²/g und besonders bevorzugt von 4000 bis 5000 cm²/g gemahlen. Als Sulfatträger eignen sich besonders Alkali- und / oder Erdalkalisulfate, vorzugsweise in Form von Gips und / oder Halbhydrat und / oder Anhydrit.

Der gemahlene Ternesit-Calciumsulfoaluminat-Klinker bzw. Ternesit-Klinker kann mit einem oder mit Mischungen anderer Stoffe, wie zum Beispiel, aber nicht ausschließlich, mit Portlandzement, geopolymerem Binder; Calciumaluminatzement, künstlichen und natürlichen Puzzolanen / latent hydraulischen Materialien, Kalksteinmehlen etc. oder mehreren davon, zu einer Bindemittelmischung kombiniert werden. Dies ist jedoch entgegen EP 1 171 398 B1 zum Erreichen einer brauchbaren hydraulischen Reaktivität nicht erforderlich, vielmehr zeigt der zu Zement gemahlenen Klinker allein die gewünschten hydraulische Reaktivität.

Vorzugsweise enthält der Zement bzw. die Bindemittelmischung außerdem als Zusatzmittel einen oder mehrere Abbinde- und / oder Erhärtungsbeschleuniger, vorzugsweise ausgewählt unter Komponenten mit verfügbarem Aluminium beziehungsweise solchen, die in Kontakt mit Wasser Aluminium, zum Beispiel in der Form von Al(OH)₄⁻ oder amorphes Al(OH)₃-Gel, freisetzen, wie zum Beispiel, aber nicht ausschließlich, lösliche Alkali-Aluminate [z.B. Na₂Al₂O₄, K₂Al₂O₄, etc.], amorphes Aluminiumhydroxid (z.B. Al(OH)₃). Des Weiteren kann der Zement bzw. die Bindemittelmischung als Zusatzmittel einen oder mehrere Abbinde- und / oder Erhärtungsbeschleuniger, ebenfalls in Kombination mit den vorgenannten Komponenten mit verfügbarem Aluminium, vorzugsweise ausgewählt unter Lithiumsalzen und -hydroxiden, anderen Alkalisalzen und -hydroxiden, Alkalisilikaten enthalten.

Zusätze, wie zum Beispiel Alkali-Aluminate und Alkalisalze, -silikate und -hydroxide, welche den pH-Wert der Lösung und damit einhergehend die Reaktivität von C₅S₂$ zusätzlich erhöhen, sind besonders bevorzugt und können in einer Menge im Bereich von 0,1 bis 10 Gew.%, vorzugsweise von 0,5 bis 5 Gew.% und noch stärker bevorzugt von 1 bis 2 Gew.% dosiert werden.

Es ist weiter bevorzugt, wenn Betonverflüssiger und / oder Fließmittel und / oder Verzögerer, vorzugsweise auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und borate, Oxalate, Sulfanilsäure, Aminocarbonsäuren, Salicylsäure und Acetylsalicylsäure, Dialdehyde enthalten sind.

Ein üblicher Calciumsulfoaluminat(ferrit)(Belit) - Klinker oder - Zement kann mit einem Klinker und/oder Zement, hauptsächlich enthaltend C₅S₂$ von 20 bis 100 Gew.-%, sowie weiteren Sulfatträgern gemeinsam vermahlen jedoch auch separat gemahlen und anschließend zu einem Zement / Bindemittel kombiniert werden.

Überraschend hat sich gezeigt, dass dem Bindemittel künstliche und natürliche (getemperte) Puzzolane (wie zum Beispiel, aber nicht ausschließlich Ziegelmehl, Flugaschen, Tuff, Trass, Sedimente mit hohem Anteil an löslicher Kieselsäure, getemperte Tone und Schiefer, künstliche Gläser, etc.), latent hydraulische Materialien (wie zum Beispiel, aber nicht ausschließlich, Hüttensand, künstliche Gläser, etc.) und deren Kombinationen mit relativ hohen Gehalten zugesetzt werden können (solche Materialien werden im folgenden als Cementitious Materials [CM] zusammengefasst). Dahingegen ist der Einsatz solcher Materialien typischerweise bei auf CSA(F)(B) basierten Bindemitteln, aufgrund des geringen pH-Wertes und/oder des geringen bzw. fehlenden Portlandit-Gehaltes, nur sehr begrenzt möglich (laut Literatur max. 15 Gew.-% [Živica V. (2000) Properties of blended sulfoaluminate belite cement. C. B. Mat., Vol. 14, pp 433-437; Živica V. (2001) Possibility of the modification of the properties of sulfoaluminate belite cement by its blending. Ceramics Silikaty, Vol. 45 (1), pp 24-30]). Durch die Zugabe eines auf Ternesit basierten Klinkers oder Zements zu Calciumsulfoaluminat(ferrit) (Belit) Klinker/Zement/Bindemittel bzw. bei dem Ternesit-Calciumsulfoaluminat-Klinker/-Zement/-Blndemittel können die Anteile solcher Zugaben und/oder Mischungen dieser in Summe von:
- Bindemittel 20 bis 95 Gew.%, vorzugsweise 40 bis 80 Gew.-% und noch stärker bevorzugt 50 bis 70 Gew.-%
- CM 5 bis 80 Gew.-%, vorzugsweise 20 bis 60 Gew.-% und noch stärker bevorzugt 30 bis 50 Gew.-%
reichen, wobei die Werte auf die gesamte Menge an Bindemittel bezogen sind und sich die Anteile mit den restlichen Bindemittelkomponenten zu 100% addieren.

Besonders bevorzugt werden künstliche und natürliche Puzzolane und latent hydraulische Materialien zugefügt, welche mit dem Ternesit einen eigenen Beitrag zur Festigkeitsentwicklung liefern. Es wurde nämlich überraschend gefunden, dass im Falle von Aluminium-reichen Puzzolanen/latent hydraulischen Materialien deren Aluminium, welches im Zuge der Hydratation freigesetzt wir (z.B. in der Form von Al(OH)₄⁻ oder als amorphes Aluminiumhydroxid(-Gel), mit Ternesit umgesetzt wird. Besonders vorteilhaft ist dabei, dass Ternesit in der Lage ist, kontinuierlich Sulfat bereitzustellen, so dass auch zeitlich spät vorliegendes Al(OH)4⁻ oder amorphes Aluminiumhydroxid, zum Beispiel durch die Reaktion von Hüttensand und/oder Flugasche gebildet, umgesetzt werden kann. Sulfattreiben wird, zumindest weitgehend und in der Regel vollständig, verhindert.

Das erfindungsgemäße Bindemittel bildet in Gegenwart von Wasser durch die Reaktion mit zum Beispiel C₄A₃$ AFₜ- und AFₘ-Phasen sowie Al(OH)₃. Die Bildung/Freisetzung von Al(OH)4⁻ oder als amorphes Aluminiumhydroxid(-Gel) führt zur fortschreitenden Reaktion der C₅S₂$-Phase und stellt einerseits zusätzliches Sulfat zur Verfügung, was wiederum AFₜ stabilisiert und eine mögliche Transformation zu AFₘ vermeidet / verringert, andererseits wird eine reaktive Form von C₂S freigesetzt, C₅S₂$ oder (C₂S)₂ ● C$ ↔ 2 C₂S + 1 C$, die mit Wasser aber auch mit dem verfügbaren Al(OH)₃ reagieren und C₂AS ● 8 H₂O (Strätlingit) sowie C-(A)-S-H bilden kann. Die Stabilisierung von AFₜ und der Verbrauch von Al(OH)₃ sowie die Verringerung der Porosität durch die Bildung von C₂AS ● 8 H₂O und C-(A)-S-H des erfindungsgemäßen Zementes führt zu einer deutlichen Verbesserung der Dauerhaftigkeit zum Beispiel, aber nicht ausschließlich, durch die Verringerung der Gesamtporosität und / oder des verbundenen Porenraums und die Beständigkeit gegenüber einem möglichen Sulfatangriff.

Bevorzugte Puzzolane / latent hydraulische Materialien sind getemperte Tone (z.B. Metakaolin) und Schiefer, Flugaschen, Hüttensande sowie künstliche (puzzolanische und latent hydraulische) Gläser.

Die Komponenten des erfindungsgemäßen Bindemittels können separat oder gemeinsam, sowie mit oder ohne zusätzliche Sulfatträger, in an sich bekannter Weise auf übliche Zementfeinheiten (nach Blaine) von 2000 bis 10000 cm²/g, vorzugsweise von 3000 bis 6000 cm²/g und besonders bevorzugt von 4000 bis 5000 cm²/g gemahlen werden. Als Sulfatträger eignen sich besonders Alkali- und / oder Erdalkalisulfate, vorzugsweise in Form von Gips und / oder Halbhydrat und / oder Anhydrit und / oder Magnesiumsulfat.

Der C₅S₂$ enthaltende Klinker, besonders wenn dieser wenig andere Phasen aufweist, lässt sich mit sehr geringem Energieeinsatz mahlen, so dass dieser, wenn zum Beispiel eine höhere Reaktivität (schnellere Umsetzung / Verbrauch) von C₅S₂$ erwünscht ist, auf höhere Feinheiten des C₅S₂$-enthaltenden Klinkers durch separates Mahlen oder Vormahlen eingestellt werden kann. Das ermahlene Produkt kann, wenn für eine spezielle Anwendung benötigt, auf eine Partikelgrößenverteilung mit d₅₀ kleiner 20 µm und d₉₀ kleiner 100 µm, beziehungsweise einem d₅₀ kleiner 5 µm und einem d₉₀ kleiner 20 µm aber auch einem d₅₀ kleiner 0,1 µm und einem d₉₀ kleiner 2 µm aufweisen.

Eine intensive Aufmahlung des C₅S₂$ enthaltenden Klinkers kann dazu führen, dass der Phasenbestand des Klinkers, z.B. C₅S₂$, teilweise (oft 3 bis 20 %) bis nahezu vollständig (> 90 %) röntgenamorph vorliegt. Dies geht mit einer signifikanten Erhöhung der Reaktivität einher und erlaubt die Formulierung von neuartigen, hoch reaktiven Bindemittelsystemen.

Ein sehr fein gemahlener Ternesit-Klinker kann schon innerhalb der ersten 24 h bis 7 Tage zur Festigkeit beitragen. Eine solche Aufmahlung ist bei einem Klinker, der signifikante Anteile (z.B. 15 % und mehr) an C₄A₃$ enthält, nicht möglich, weil C₄A₃$ leichter mahlbar ist als C₅S₂$ und daher zu fein gemahlen werden würde. Die hohe Reaktivität des C₄A₃$ und der hohe Wasseranspruch würden bei entsprechend feiner Mahlung des C₅S₂$ in einem Ternesit-Calciulsulfoaluminat-Klinker den Erhalt eines brauchbaren Bindemittels verhindern.

Bei der Verarbeitung des erfindungsgemäßen Zementes bzw. eines diesen enthaltenden Bindemittels ist ein Wasser / Bindemittelwert von 0,2 bis 2 geeignet, bevorzugt von 0,3 bis 0,8 und besonders bevorzugt von 0,45 bis 0,72.

Zur Herstellung des Bindemittels können Einzelkomponenten oder Komponentengemische verwendet werden, je nach Qualität und Zusammensetzung der verfügbaren Rohstoffe bzw. Klinker.

Calciumsulfoaluminatklinker und - zemente mit der Hauptkomponente C₄A₃$ sind in verschiedenen Zusammensetzungen bekannt und verfügbar. Für das erfindungsgemäße Bindemittel sind diese alle geeignet. Beispielsweise sind folgende Calciumsulfoaluminatzemente kommerziell verfügbar:

**Lafarge Aether®:**

| | | | |
|---|---|---|---|
| Belit (α; +/-β) C₂S | 40 - 75%; | Ye'elimit C₄A₃$ | 15 - 35%; |
| Ferrit C₂(A,F) | 5 - 25%; | Nebenphasen | 0,1 - 10% |

**Lafarge Rockfast®:**

| | | | |
|---|---|---|---|
| Belit (α; +/-β) C₂S | 0 - 10%; | Ye'elimit C₄A3$ | 50 - 65% |
| Aluminat CA | 10 - 25%; | Gehlenit C₂AS | 10 - 25%; |
| Ferrit C₂(A,F) | 0 - 10%; | Nebenphasen | 0 - 10% |

**Italcementi Alipre®:**

| | | | |
|---|---|---|---|
| Belit (α; +/-β) C₂S | 10 - 25%; | Ye'elimit C₄A₃$ | 50 - 65%; |
| Anhydrit C$ | 0 - 25%; | Nebenphasen | 1 - 20% |

**Cemex CSA:**

| | | | |
|---|---|---|---|
| Belit (α; +/-β) C₂S | 10 - 30%; | Ye'elimit C₄A3$ | 20 - 40% |
| Anhydrit C$ | >1%; | Alit C₃S | >1 - 30%; |
| Freikalk CaO | <0.5 - 6%; | Portlandit Ca(OH)₂ | 0 - 7%; |
| Nebenphasen | 0 - 10% | | |

**Denka® CSA**

| | | | |
|---|---|---|---|
| Belit (α; +/-β) C₂S | 0 - 10%; | Ye'elimit C₄A₃$ | 15 - 25%; |
| Anhydrit C₂(A,F) | 30 - 40%; | Portlandit Ca(OH)₂ | 20 - 35%; |
| Freikalk CaO | 1 - 10%; | Nebenphasen | 0 - 10% |

**China Type II & III CSA**

| | | | |
|---|---|---|---|
| Belit (α; +/-β) C₂S | 10 - 25%; | Ye'elimit C₄A₃$ | 60 - 70%; |
| Ferrit C₂(A,F) | 1 - 15%; | Nebenphasen | 1 - 15% |

**Barnstone CSA**

| | | | |
|---|---|---|---|
| Belit (α; +/-β) C₂S | 22%; | Ye'elimit C₄A3$ | 60%; |
| Aluminat C₁₂A₇ | 5%; | Alit C₃S | 8%; |
| Ferrit C₂(A,F) | 4%; | Nebenphasen | 1% |

Die Calciumsulfoaluminatklinker und -zemente enthalten teilweise bereits Ternesit, üblicherweise jedoch in zu geringer Menge. Daher wird C₅S₂$ oder ein daran reiches Gemisch zugesetzt. Es scheint außerdem, dass erfindungsgemäß gezielt, d.h. bei optimierter Temperatur, hergestelltes C₅S₂$ reaktiver ist, als ein bei der Herstellung CSA(B) als Nebenprodukt erhaltenes Ternesit (siehe Beispiel 4 und 5).

Auch in Bezug auf den Belitgehalt genügen nicht alle Calciumsulfoaluminatklinker den Anforderungen des erfindungsgemäßen Bindemittels, so dass auch Belit oder Belit-reiche Gemische zugesetzt werden, sofern der Belitgehalt der Calciumsulfoaluminatkomponente und/oder Ternesitkomponente zu gering ist. Belit kann zum einen zur Frühfestigkeit aber im Wesentlichen signifikant zur Endfestigkeit der etwaigen Bindemittelsysteme und zum anderen zur Anregung von puzzolanischen und latent hydraulischen Materialien beitragen.

Der erfindungsgemäße Zement bzw. das erfindungsgemäße Bindemittel eignet sich hervorragend zur Verfestigung von Altlasten. Hierbei ist ein Gehalt an adsorptiv wirksamen Zusatzstoffen, z.B. Zeolithen und / oder Ionenaustauscherharzen, bevorzugt. Bei der Immobilisierung von Schwermetallen in anorganischen Bindemitteln kann ein hoher pH-Wert von Vorteil sein, der die Bildung schwer löslicher Hydroxide begünstigt. Dies kann zum Beispiel, aber nicht ausschließlich, durch ein Mischen des erfindungsgemäßen Klinkers mit Portlandzement in einem Bindemittel realisiert werden.

Ein weiterer Vorteil der erfindungsgemäßen Zements bzw. der Bindemittelmischung daraus ist die Bildung verschiedener Phasen im Zuge der Hydratation (z.B. Ettringit [AFₜ], Monophasen [AFₘ], Metall-Metall Hydroxisalze [LDH], etc..), die verschiedene Schwermetalle sowie weitere Schadstoffe (zum Beispiel, Chloride, etc.) in ihrer Struktur einbauen und somit dauerhaft fixieren können.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 2 sind die verwendeten Rohstoffe, mit denen die im Folgenden beschriebenen Beispiele durchgeführt wurden, anhand ihrer oxidischen Hauptbestandteile und ihrer Mahlfeinheit charakterisiert. Der Gewichtsverlust nach einem Tempern bei 1050 °C ist ebenfalls angegeben. Tabelle 3 zeigt die mineralogische Phasenzusammensetzung der verwendeten industriellen Nebenprodukte.

**Tabelle 2: Elementare Zusammensetzung der verwendeten Rohstoffe (RFA)**

| Rohstoff | | Kalkstein | Schlacken | | | Aschen | | | Sulfatträger | Al-Korr. | Metakaolin |
|---|---|---|---|---|---|---|---|---|---|---|---|
| Probe | | K1 | S1 | S2 | S3 | FA1 | FA2 | FA 3 | MicroA | Al(OH)₃ | MK |
| RFA | Einheit | | | | | | | | | | |
| GV 1050 °C | % | 43,09 | 0,00 | 0,00 | 1,15 | 3,48 | 0,82 | 2,79 | 4,64 | 34,64 | 1,91 |
| SiO₂ | % | 1,53 | 36,82 | 43,42 | 35,46 | 35,70 | 28,50 | 47,30 | 4,17 | 0,00 | 48,00 |
| Al₂O₃ | % | 0,35 | 11,72 | 11,40 | 12,99 | 21,8 | 12,5 | 27,70 | 1,36 | 65,36 | 41,60 |
| TiO2 | % | 0,03 | 0,88 | 0,64 | 0,70 | 1,21 | 1,05 | 1,38 | 0,04 | 0,00 | |
| MnO | % | 0,01 | 0,37 | 1,05 | 0,62 | 0,03 | 0,18 | 0,06 | 0,00 | 0,00 | |
| Fe₂O₃ | % | 0,19 | 0,52 | 1,43 | 0,26 | 6,22 | 5,18 | 6,29 | 0,37 | 0,00 | 1,80 |
| CaO | % | 54,50 | 38,61 | 37,36 | 37,81 | 25,80 | 37,4 | 7,84 | 37,40 | 0,00 | 5,70 |
| MgO | % | 0,22 | 7,75 | 2,62 | 7,74 | 1,34 | 4,81 | 2,31 | 1,82 | 0,00 | 0,10 |
| K₂O | % | 0,04 | 0,44 | 0,36 | 0,74 | 0,13 | 0,28 | 1,46 | 0,28 | 0,00 | 0,95 |
| Na₂O | % | 0,00 | 0,18 | 0,38 | 0,75 | 0,07 | 0,07 | 0,59 | 0,06 | 0,00 | |
| SO₃ | % | 0,01 | 2,70 | 1,11 | 1,58 | 3,96 | 7,71 | 0,29 | 49,80 | 0,00 | |
| P₂O₅ | % | 0,01 | 0.00 | 0,01 | 0,00 | 0,15 | 1,27 | 1,77 | 0,00 | 0,00 | |
| Summe | | 99,98 | 100,00 | 99,78 | 99,80 | 99,89 | 99,77 | 99,78 | 99,94 | 100,00 | 100,06 |
| | | | | | | | | | | | |
| Amorph | % | / | / | >95 | | 48,0 | 38,0 | 58,9 | / | / | |
| Dichte | g/cm³ | 2,64 | 2,82 | 2,82 | 2,81 | 2,59 | 2,82 | 2,30 | | | 2,54 |
| Mahlfeinheit nach Blaine | cm²/g | 3350 | 4700 | 3710 | 3900 | 6380 | 4380 | 4270 | | | |

**Tabelle 3: Mineralogische Phasenzusammensetzung der verwendeten industriellen Nebenprodukte (QXRD nach Rietveld)**

| Rohstoff | | Schlacken | | | Aschen | | |
|---|---|---|---|---|---|---|---|
| Probe | | S1 | S2 | S3 | FA1 | FA2 | FA3 |
| Mineral | Einheit | | | | | | |
| Kalzit | Gew.-% | | | 1,2 | 1,6 | | |
| Quarz | Gew.-% | 0,5 | 0,25 | | 7,5 | 11,5 | 9,8 |
| Cristobalit | Gew.-% | | | | 1,2 | 0,4 | |
| Freikalk | Ges.-% | | | | 2,4 | 9,3 | 0.9 |
| Periklas | Gew.-% | | | | | 2,8 | 1,1 |
| Anhydrit | Gew.-% | | | | 4,5 | 10,4 | 0,6 |
| Feldspäte | Gew.% | | | | 8,0 | | |
| Akermanit | Gew.-% | 56,0 | 56,0 18,3 | 18,3 | | | |
| Gehlenit | Gew.% | 26,8 | | 8,9 | 8,9 | 6,3 | |
| Merwinit | Ges.-% | | 0,4 | 3,1 | | 4,9 | |
| Augit | Gew.-% | 14,6 | | | | | |
| Mullit | Gew.-% | 0,8 | | | 3,6 | | 25,1 |
| Maghemit | Gew.-% | | 0,14 | | 1,8 | 1,2 | 1,4 |
| Hämatit | Ges.-% | | | | 2,4 | 0,9 | 0,8 |
| Rutil | Gew.% | | | | | | 0,3 |
| Perowskit | Gew.-% | | | | 2,4 | | |
| Ye'elimit | Gew.-% | | | | 1,2 | 3,1 | |
| C₂S | Gew.-% | | | | 6,5 | 8,1 | 1,1 |
| C₄AF | Gew.-% | | | | | 3,1 | |
| C₅S₂$ | Gew.-% | 1,3 | | | | | |
| Amorph | Gew.-% | 0,00 | 99,21 | 68,5 | 48,0 | 38,0 | 58,9 |

### Beispiele 1 Tₚᵤᵣ

Eine stöchiometrische Mischung aus CaCO₃ [Merck, p.a.], CaSO₄ [Merck, p.a.] und Quarzmehl [Merck, p.a.] wurde 1 h bei 1100°C gebrannt, anschließend rapide gekühlt, gemahlen und ein weiteres Mal 1h bei 1100°C gebrannt und rapide gekühlt.

### Beispiel 2 TK_{FA}

Die Rohmischung bestand aus 45 Gew.-% Kalkstein (K1) + 27 Gew.-% FA2, 20 Gew.-% MicroA und 8 Gew.-% Quarzmehl (Merck, p.a.). Das Rohmehl wurde in bei 1100°C gesintert und durchlief nach dem Sintern zur Temperung ein Kühlprogramm bei dem die Temperatur über etwa 35 min von 1100°C auf 850°C gesenkt wurde. Der Klinker wurde dann rapide an der Luft abgekühlt.

### Beispiel 3 TK_{AGS}

Die Rohmischung bestand aus 58 Gew.-% K1 + 8 Gew.-% MK, 24 Gew.-% MircoA und 10 Gew.-% Quarzmehl (Merck, p.a.). Das Rohmehl durchlief dasselbe Programm wie in Beispiel 2.

### Beispiel 4

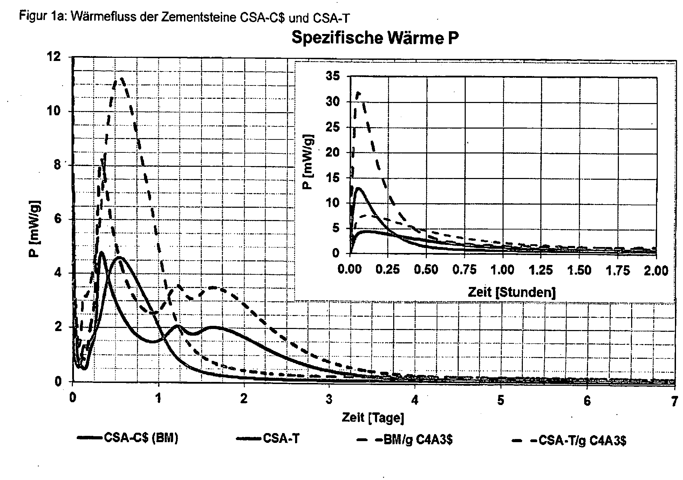

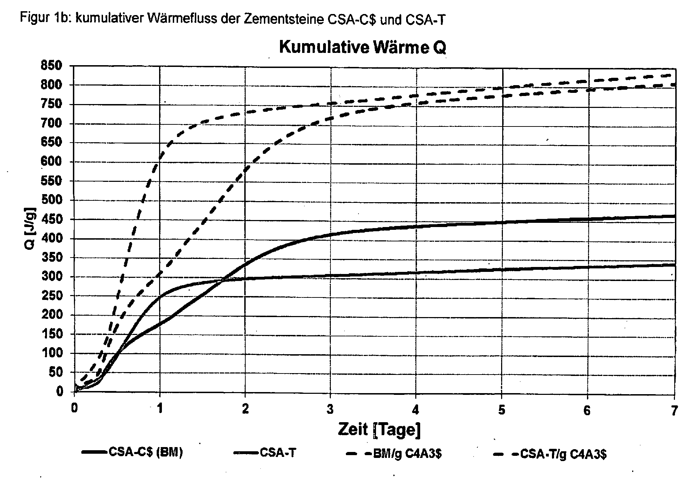

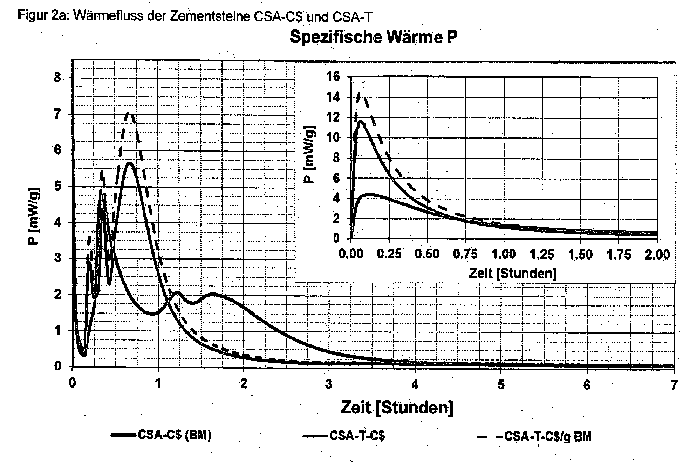

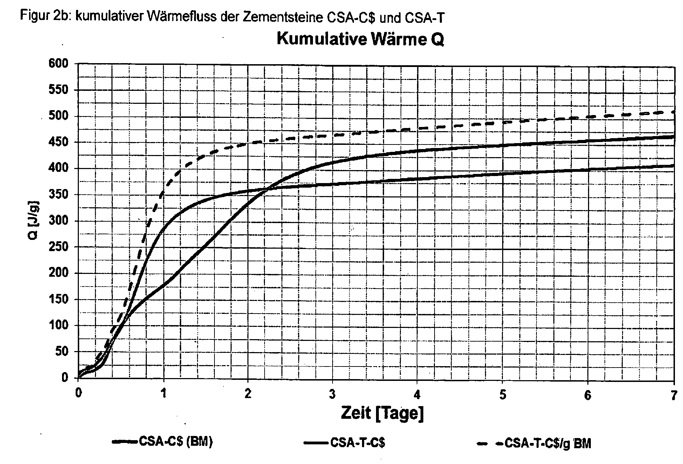

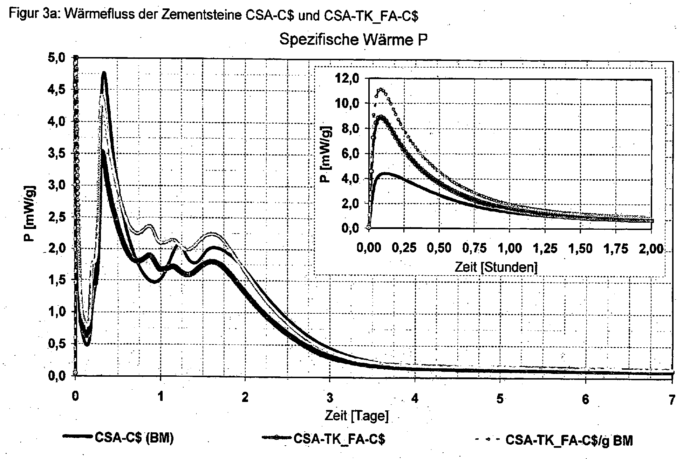

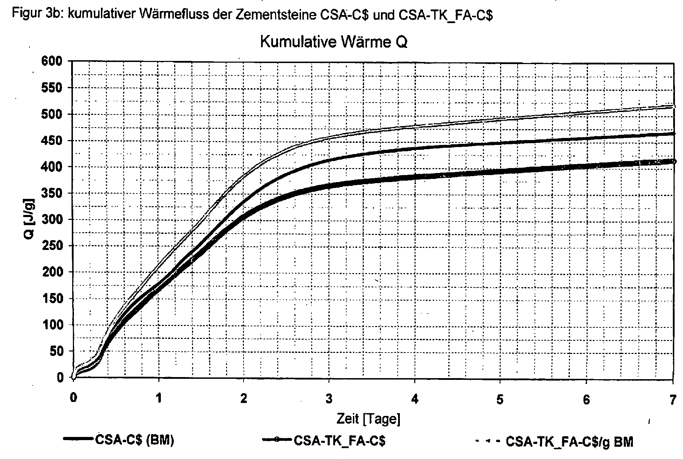

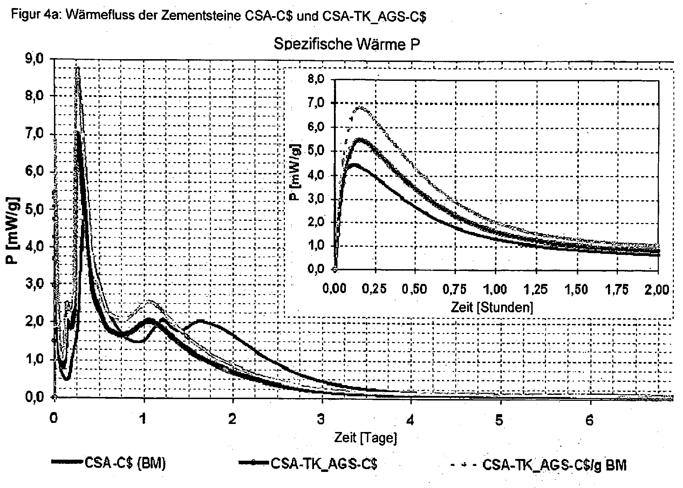

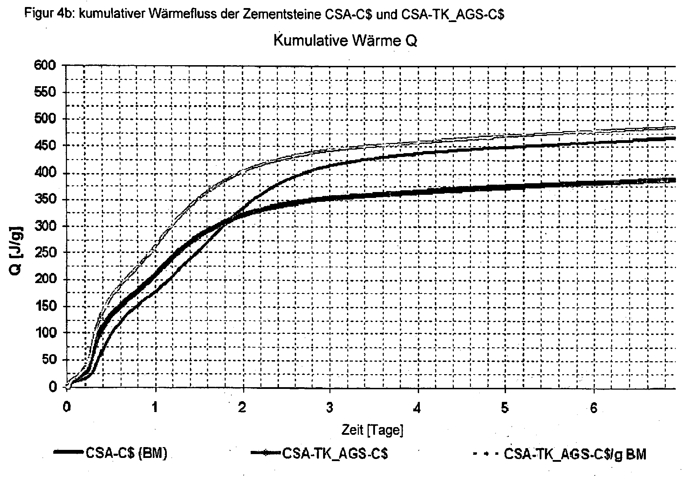

Verschiedene Bindemittel wurden aus einem kommerziellen CSA Zement (Zusammensetzung siehe Tabelle 6) und den drei Ternesitqualitäten aus den Beispielen 1-3 sowie Micro A gemischt. In Tabelle 4 sind die Zusammensetzungen der Ternesite und in Tabelle 5 die Mischungsverhältnisse mit dem Zement aufgelistet, die Figuren 1 bis 4 geben den Wärmefluss und den kumulativen Wärmefluss der Mischungen beim Anmachen mit Wasser mit einem W/B von 0,7 wieder. Tabelle 7 gibt die Mineralogie der Zemente entsprechend Beispiel 4 (QXRD nach Rietveld) und TG Daten (chem. gebundenes Wasser) der Zemente sowie der daraus hergestellten Zementsteine, normiert auf 100% Paste; W/Z 0,7 an.

**Tabelle 4: Chemische (berechnet) und mineralogische Zusammensetzung der Klinker aus den Beispielen 1 bis 3**

| **Oxide** | **Tpur** | **TK_{FA}** | **TK_{AGS}** |
|---|---|---|---|
| SiO2 | 25,00% | 21,30% | 22,16% |
| Al₂O₃ | - | 4,75% | 4,94% |
| TiO₂ | -- | 0,38% | 0,04% |
| MnO | - | 0,07% | 0,01% |
| Fe₂O₃ | - | 1,96% | 0,45% |
| CaO | 58,34% | 53,20% | 55,34% |
| MgO | - | 2,23% | 0,77% |
| K₂O | - | 0,19% | 0,22% |
| Na₂O | -- | 0,04% | 0,02% |
| SO₃ | 16,66% | 15,44% | 16,06% |
| P₂O₅ | -- | 0.44% | 0,01% |

| **Phasen** | | | |
|---|---|---|---|
| Anhydrit | 0,4 | 0,3 | 0,2 |
| C₃A (cub) | -- | 2,2 | - |
| C₃A (orth) | -- | 1,2 | 0,4 |
| C₂S a^{·}H | -- | 2,7 | 1,4 |
| C₂S beta | -- | 5,7 | 3,2 |
| C₂S gamma | -- | 1,1 | 0,4 |
| ΣC₂S | -- | 9,5 | 5,0 |
| Ternesit | 99,2 | 74,9 | 85.5 |
| Freikalk | <0,1 | 0,3 | 0,3 |
| Periklas | -- | 1,2 | 0,5 |
| C₄A₃S | -- | 9,3 | 7,0 |
| Augit | -- | 1,2 | 1,1 |
| Quarz | 0,4 | -- | -- |

| **Verhältnisse** | | | |
|---|---|---|---|
| CaO/Al₂O₃ | -- | 11,21 | 11,21 |
| Al₂O₃/Fe₂O₃ | -- | 2,42 | 10,92 |
| SO₃/(Al₂O₃+Fe₂O₃) | -- | 2,30 | 2,98 |
| SO₃/SiO₂ | 0,67 | 0,72 | 0,72 |
| CaO/SO₃ | 3,50 | 3,45 | 3,45 |
| CaO/SiO₂ | 2,33 | 2,50 | 2,50 |
| mgO/siO₂ | 0,00 | 0,10 | 0,03 |

**Tabelle 5: Mischungen eines kommerziellen Calciumsulfoaluminat-Zements mit Klinkern entsprechend Beispiel 1-3**

| Mischung | CSA | Tₚᵤᵣ | TK_{FA} | TK_{AGS} | Micro A |
|---|---|---|---|---|---|
| CSA-C$ | 85% | | | | 15% |
| CSA-T | 60% | 40% | | | |
| CSA-T-C$ | 68% | 20% | | | 12% |
| CSA-TK_FA-C$ | 68% | | 20% | | 12% |
| CSA-TK_AGS-C$ | 68% | | | 20% | 12% |

**Tabelle 6: Chemische Zusammensetzung des verwendeten kommerziellen Calciumsulfoaluminat-Zements**

| | | China CSA |
|---|---|---|
| GV 1050 °C | % | 0,18 |
| SiO₂ | % | 6,93 |
| Al₂O₃ | % | 36,48 |
| TiO₂ | % | 1,64 |
| MnO | % | 0,00 |
| Fe₂O₃ | % | 2,24 |
| CaO | % | 40,61 |
| MgO | % | 2,94 |
| K₂O | % | 0,18 |
| Na₂O | % | 0,00 |
| SO₃ | % | 8,61 |
| P₂O₅ | % | 0,14 |
| ***Sum.*** | % | ***99,94*** |

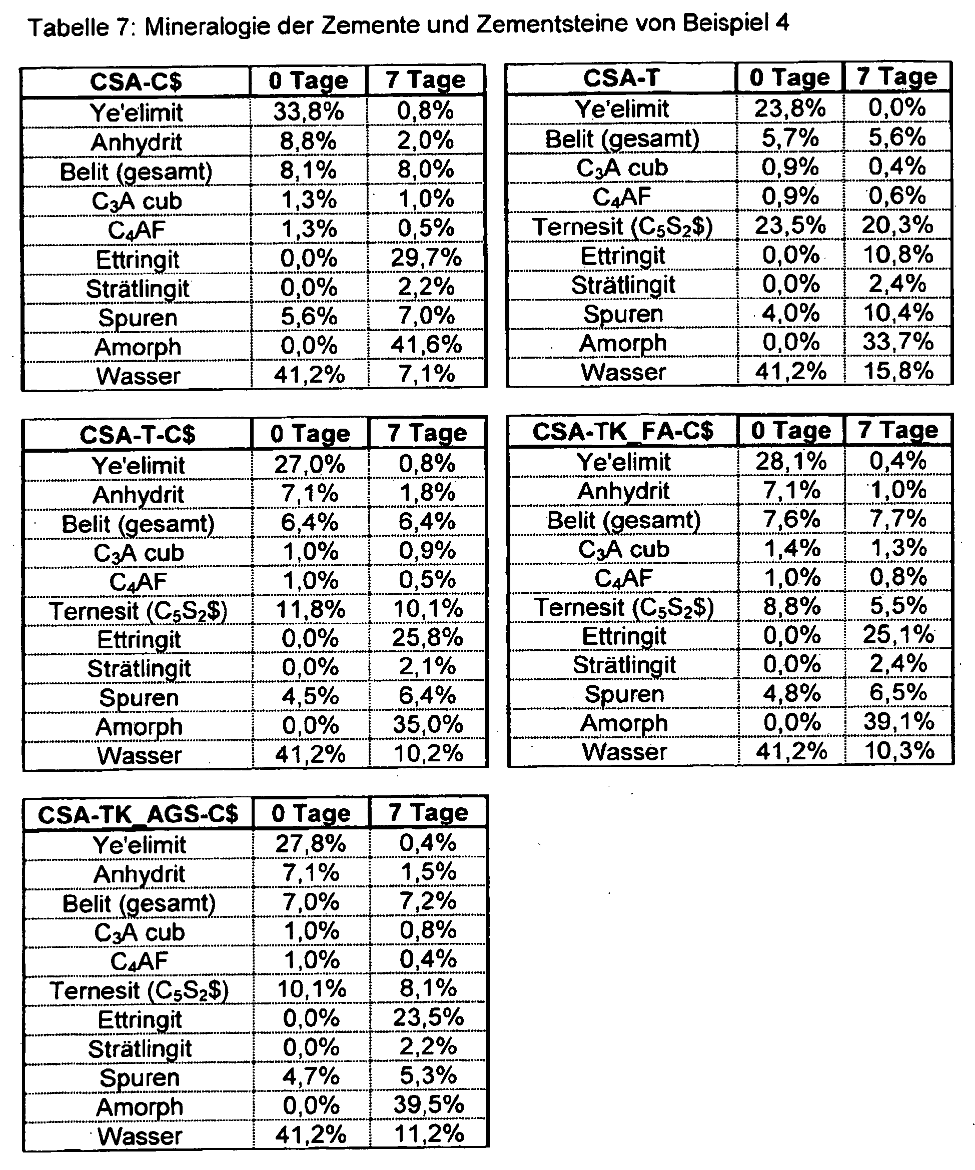

### Beispiel 5

Die Rohmischung bestand aus 44 Gew.-% K1 + 25 Gew.-% FA1 + Sulfatträger und Al(OH)₃. Eine Probe (M1) wurde nach dem Sintern direkt abgekühlt, die zweite Probe (M1a) durchlief nach dem Sintern zur Temperung ein Kühlprogramm bei dem die Temperatur über ∼45 min von 1200°C auf 850°C gesenkt und der Klinker dann rapide an der Luft abgekühlt wurde.

### Beispiel 6

Die Rohmischung bestand aus 65 Gew.-% (80% K1 /20% MK) + 5 Gew.-% FA3 + Sulfatträger und Al(OH)₃. Die Probe (M2) durchlief nach dem Sintern dasselbe Kühlprogramm wie M1a und wurde dann abgekühlt.

### Beispiel 7

Die Rohmischung bestand aus 45 Gew.-% K1 + 35 Gew.-% S2 + Sulfatträger und Al(OH)₃. Eine Probe (L1) wurde nach dem Sintern direkt abgekühlt, die zweite Probe (L1a) durchlief nach dem Sintern dasselbe Kühlprogramm wie M1a und wurde dann abgekühlt, die dritte Probe (L1b) durchlief nach dem Sintern ein Kühlprogramm bei dem die Temperatur über ∼60 min von 1150°C auf 1100°C gesenkt und der Klinker dann rapide an der Luft abgekühlt wurde.

### Beispiel 8

Die Rohmischung bestand aus 37 Gew.-% K1 + 54 Gew.-% FA2 + Sulfatträger und Al(OH)₃. Eine Probe (L2) wurde nach dem Tempern direkt abgekühlt, die zweite Probe (L2a) durchlief nach dem Tempern dasselbe Kühlprogramm wie L1b und wurde dann abgekühlt.

### Beispiel 9

Die Rohmischung bestand aus 41 Gew.-% K1 + 41 Gew.-% S1 + Sulfatträger und Al(OH)₃. Eine Probe (L3) wurde nach dem Sintern direkt abgekühlt, die zweite Probe (L3a) durchlief nach dem Sintern dasselbe Kühlprogramm wie M1a und wurde dann abgekühlt.

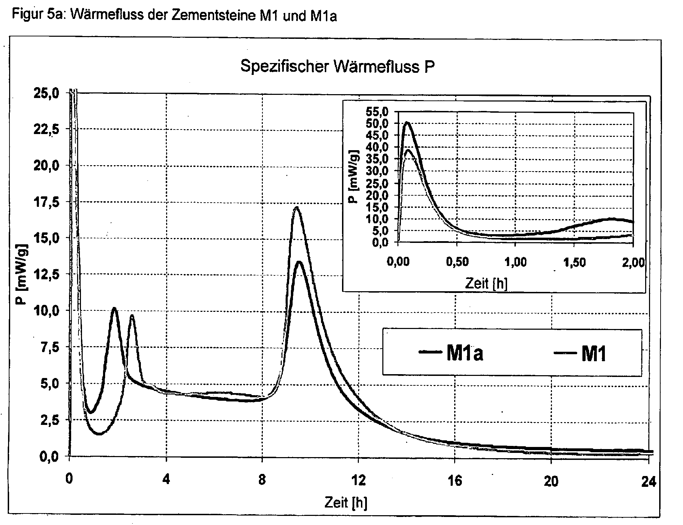

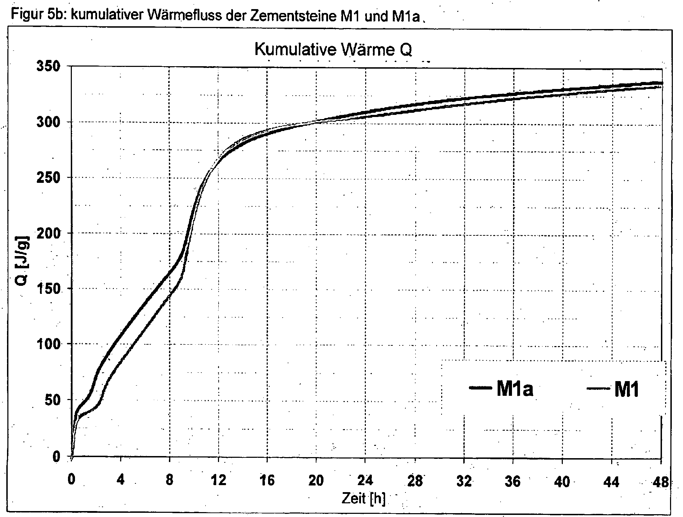

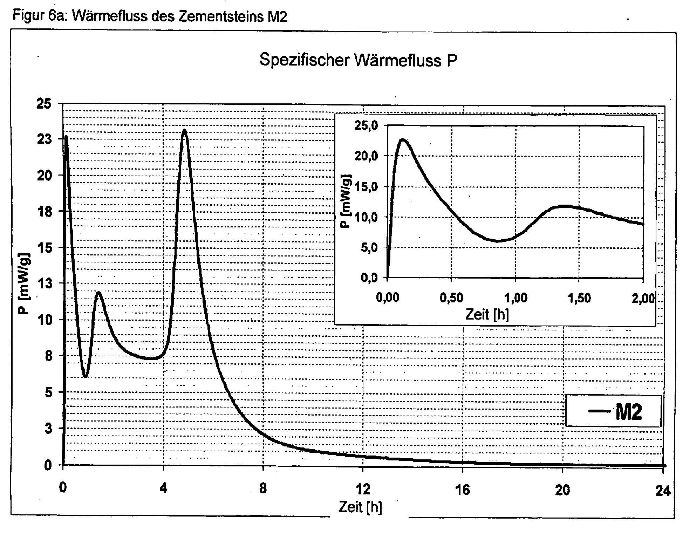

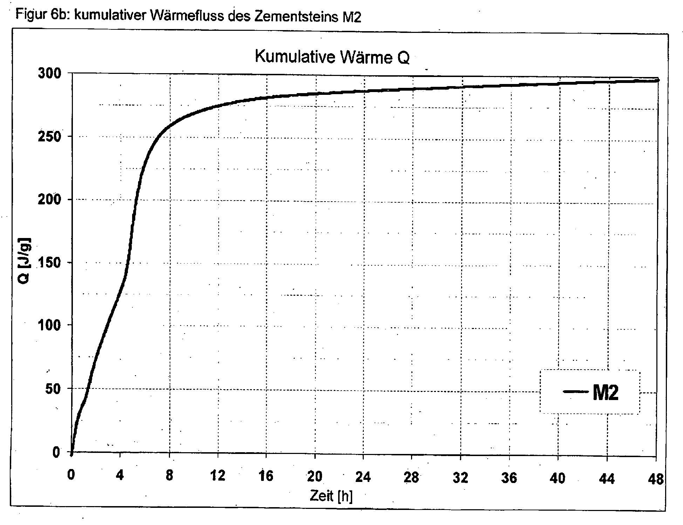

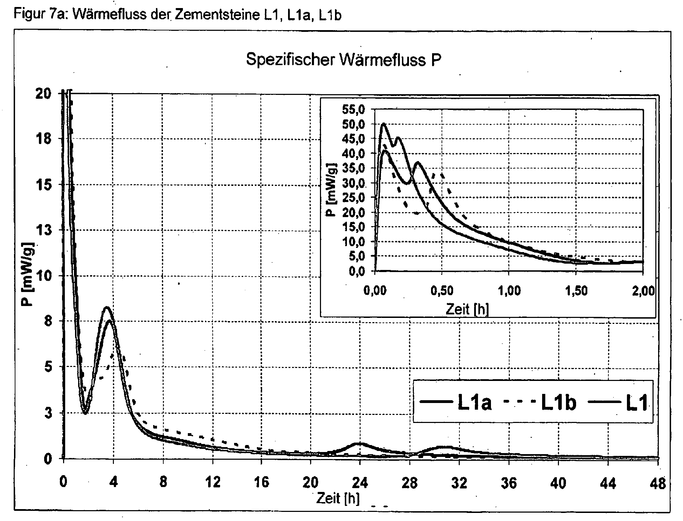

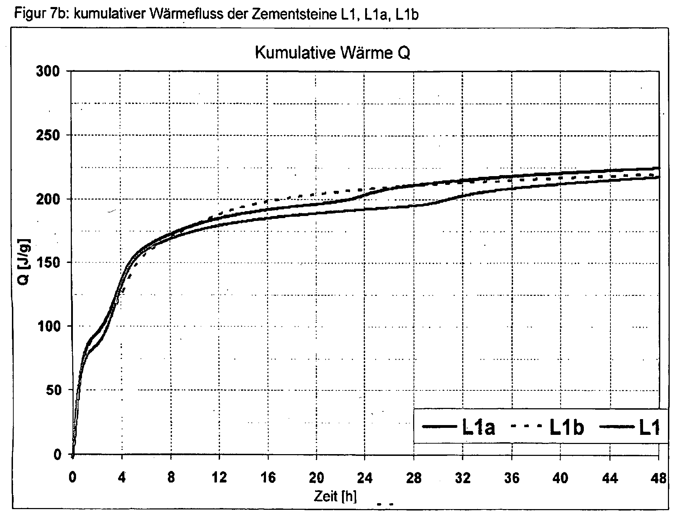

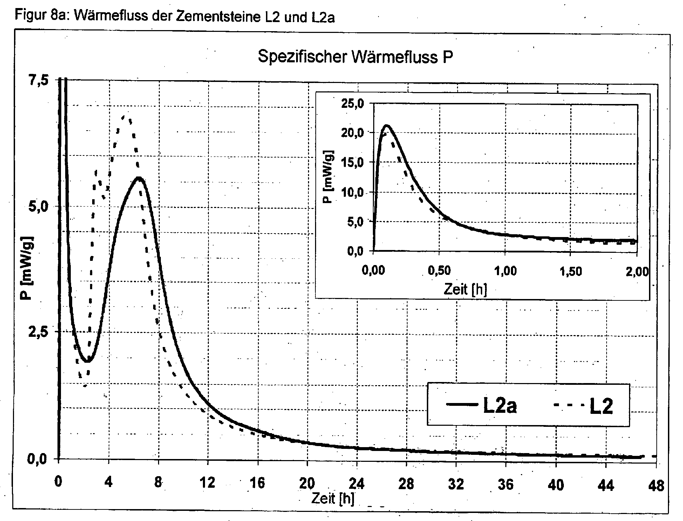

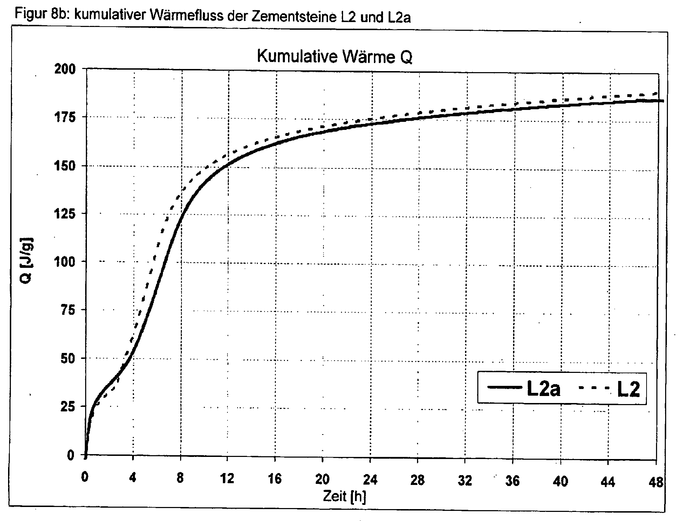

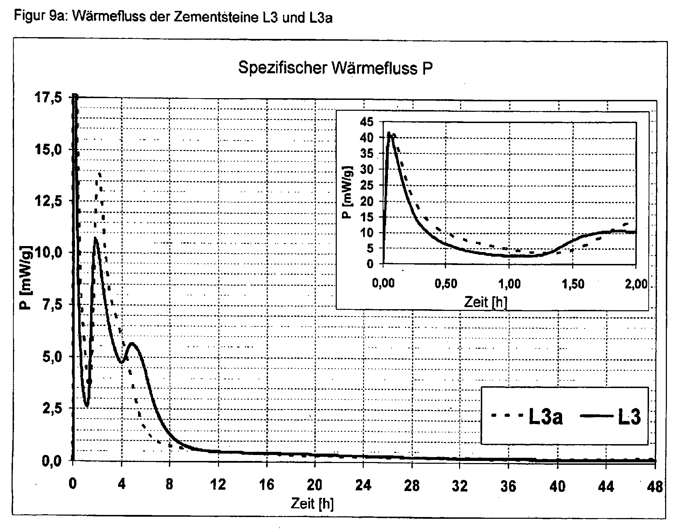

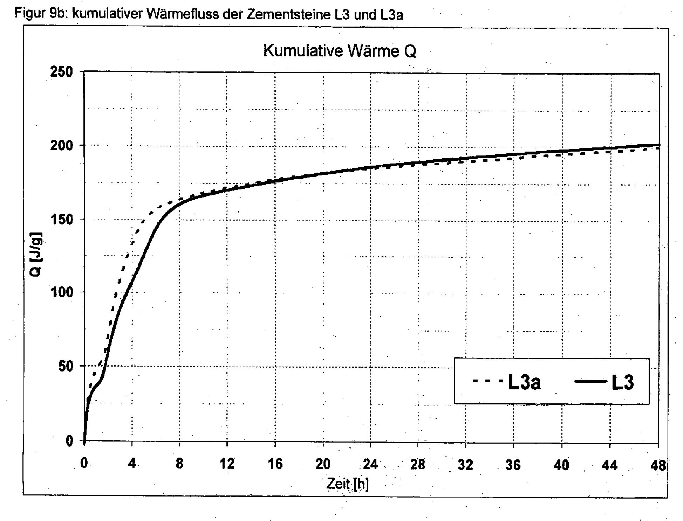

Die Analyseergebnisse für die Klinker und die Zementsteine, die aus einem Gemisch von 85 Gew.-% des Klinkers und 15 Gew.-% Anhydrit mit einem Wasser/Zementwert von 0,7 hergestellt wurden, sind in Tabelle 8 zusammengestellt. In den Figuren 5 bis 9 sind Wärmeflussmessungen für die Zemente dargestellt.

### Beispiel 10

Die Rohmischung bestand aus 52,5 Gew.-% CaCO₃ (Merck, p.a.) + 32,6 Gew.-% FA2 + MicroA und Al(OH)₃. Zwei Proben (CSAB1250_a und b) wurden nach dem Sintern bei 1250°C direkt an der Luft rapide abgekühlt, zwei weitere Proben (CSAB1100_a und b) wurden im Ofen, nach dem Tempern bei 1250°C, auf 1100°C heruntergekühlt und für 1h bei dieser Temperatur gehalten, anschließend direkt an der Luft rapide abgekühlt. In zwei weiteren Proben (CSAB1100-SO3_a und b) wurde jeweils der Sulfatgehalt des Rohmehls erhöht, anschließend durchliefen diese Proben dasselbe Temper- und Kühlprogram wie CSAB1100_a und b.

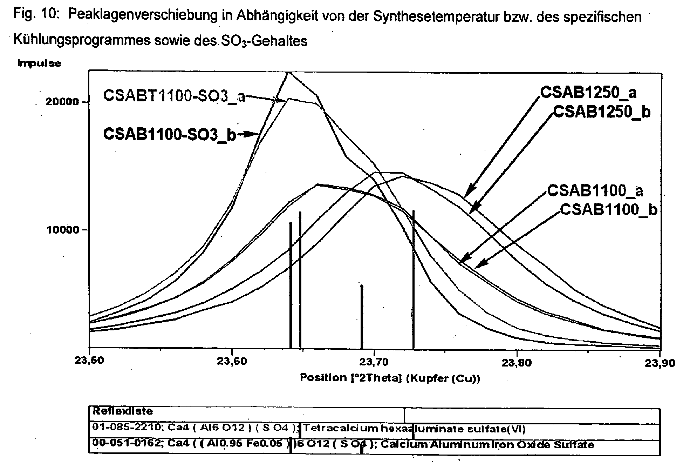

Tabelle 9 gibt die für die erhaltenen Klinker bestimmten Gitterparameter und Zusammensetzungen an. Figur 10 veranschaulicht die Abhängigkeit der Gitterparameter von der Synthesetemperatur bzw. dem spezifischen Kühlungsprogramm sowie dem SO₃-Gehalt.

Durch die Optimierung des SO₃ / (Al₂O₃+Fe₂O₃) Verhältnisses sowie die Anwendung des speziellen Herstellungsverfahrens lässt sich die Klinkerzusammensetzung optimieren bzw. variieren (siehe Tabelle 9). Der zunehmend Einbau von Eisen in die Struktur von Ye'elimit korreliert mit der Vergrößerung der Gitterparameter. Ebenfalls tritt im Zuge des Eiseneinbaus zunehmend eine kubische Modifikation anstelle der orthorhombischen auf.

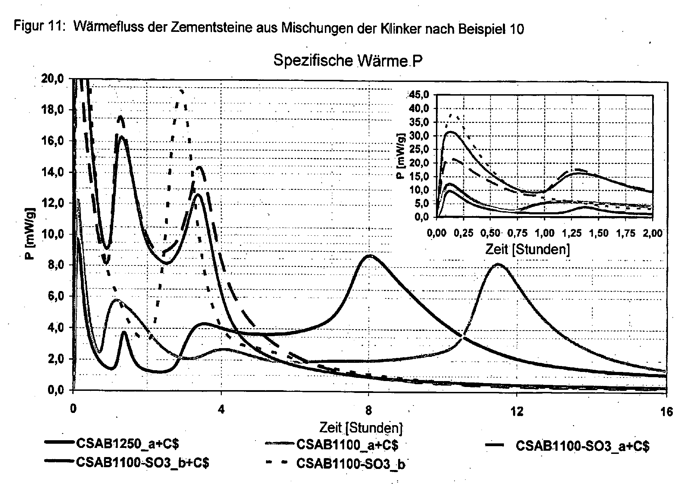

In Figur 11 ist der Wärmefluss von Zementsteinen aus Mischungen von 90 % der Klinker mit 10% MicroA und der reinen Klinkers CSAB1100-SO3_b bei einem W/Z von 0,6 dargestellt. Klinker, hergestellt entsprechend dem erfindungsgemäßen zweistufigen Verfahren bzw. mit einer optimierten mineralogischen Zusammensetzung des Rohmehls reagieren / hydratisieren eindeutig zu früheren Zeitpunkten. Versuche haben belegt, dass dies mit einer signifikanten Erhöhung der Frühfestigkeit einhergeht.

**Tabelle 8: QXRD Daten (nach Rietveld) der Klinker sowie der daraus hergestellten Zementsteine**

| Probe | Klinker | | | Zementstein | | | | | | | |
|---|---|---|---|---|---|---|---|---|---|---|---|
| | C₂S [Gew.-%] | C₄(AₓF_{(1-X)})₃$ [Gew.-%] | C₅S₂$ [Gew.-%] | physikalisch gebundenes Wasser (40°C) [Gew.-%] | chemisch gebundenes Wasser [Gew.-%] | C₂S [Gew.-%] | C₄(AₓF₍₁₋ₓ₎)₃$ [Gew.-%] | C₅S₂$ [Gew.-%] | AFt [Gew.%] | C₂ASH₈ [Gew.-%] | amorph [Gew.-%] |
| M1 | 45 | 39 | 1 | 14 | 30,8 | 20 | - | - | 35 | 2 | 39 |
| M1a | 42 | 42 | 5 | 12,8 | 31,8 | 14 | - | - | 26 | 5 | 51 |
| M2 | 23 | 44 | 26 | 18,6 | 25,8 | 30 | - | 12 | 22 | - | 32 |
| L1 | 59 | 21 | 2 | 24 | 21,4 | 34 | - | - | 27 | - | 24 |
| L1a | 58 | 22 | 2 | 23,4 | 22,6 | 34 | - | - | 31 | - | 24 |
| L1b | 46 | 22 | 19 | 23,6 | 22,1 | 27 | - | 7 | 29 | - | 26 |
| L2 | 30 | 23 | 31 | 25,9 | 18,8 | 24 | - | 17 | 29 | - | 19 |
| L2a | 20 | 24 | 42 | 26,2 | 19,2 | 15 | - | 26 | 28 | - | 19 |
| L3 | 63 | 22 | 1 | 24,6 | 19,6 | 46 | - | 1 | 30 | - | 6 |
| L3a | 55 | 23 | 12 | 24,9 | 19,0 | 40 | - | 4 | 29 | - | 11 |

**Tabelle 9: QXRD Daten (nach Rietveld) der Klinker nach Beispiel 10**

| **Phasen** | **in Klinker [Gew.-%]** | | | | | |
|---|---|---|---|---|---|---|
| | **CSAB1250_a** | **CSAB1250_b** | **CSAB1100_a** | **CSAB1100_b** | **CSA1100-SO3_a** | **CSA1100-SO3_b** |
| **C₄A₃$ ortho** | **12,8** | **12,6** | **10,3** | **10,5** | **9,2** | **2,4** |
| **C₄A₃$ cub** | **13,8** | **13,8** | **15,7** | **16,5** | **20,1** | **21,4** |
| ∑C₄A₃$ | 26,5 | 26,4 | 26,0 | 27,0 | 29,3 | 23,8 |
| α-C₂S | 0,8 | 1,0 | 1,6 | 2,1 | 1,9 | 1,3 |
| β-C₂S | 54,2 | 51,5 | 50,2 | 50,6 | 53,2 | 15,8 |
| γ-C₂S | 3,8 | 5,8 | 5,1 | 5,0 | 0,0 | 0,0 |
| ∑C₂S | 58,8 | 58,2 | 56,8 | 57,6 | 55,2 | 17,1 |
| C₅S₂$ | 0,0 | 0,0 | 0,8 | 0,8 | 5,2 | 49,7 |
| **C₄AF** | **7,2** | **6,7** | **6,7** | **6,6** | **2,7** | **1,3** |
| Minors | 7,5 | 8,7 | 9,6 | 8,0 | 7,7 | 8,3 |
| Summe | 100,0 | 100,0 | 100,0 | 100,0 | 100,0 | 100,0 |
| | | | | | | |
| SO₃/(Al₂O₃+Fe₂O₃) | 0,25 | 0,25 | 0,25 | 0,25 | 0,40 | 0,91 |
| α C₄A₃$ cub | 9,198 | 9,199 | 9,199 | 9,200 | 9,205 | 9,207 |
| c C₄A₃$ otho | 9,149 | 9,150 | 9,150 | 9,150 | 9,174 | 9,182 |

## Patentansprüche

1. Ternesit-Calciumsulfoaluminat-Klinker oder Zement, erhältlich durch Sintern einer Rohmehlmischung, welche Quellen für CaO, Al₂O₃(Fe₂O₃), SiO₂ und SO₃ enthält,
**dadurch gekennzeichnet, dass** man
die Rohmehlmischung in einem Temperaturbereich von > 1200 °C bis 1350 °C über einen Zeitraum sintert, der ausreicht, um die Rohmehlmischung zu einem Klinkerzwischenprodukt umzusetzen, typischerweise 10 bis 240 min.
das Klinkerzwischenprodukt in einem Temperaturbereich von 1200 °C bis zu einer unteren Grenze von 750 °C über eine Zeit tempert, die ausreicht, um die gewünschte Menge an C₅S₂$ zu erhalten, sowie Aluminat- und Ferratphasen und Reste der kristallinen Hochtemperaturphasen der Rohstoffe zumindest teilweise mit vorhandenem C$ zu zusätzlichen C₄(AₓF₁₋ₓ)₃$ und C₅S₂$ umzusetzen, typischerweise 15 bis 300 min,
und den Klinker mit den Hauptkomponenten C₄(AₓF₁₋ₓ)₃$, (α; β) C₂S und C₅S₂$ in folgenden Anteilen
• C₅S₂$ 5 bis 75 Gew.-%
• C₂S 1 bis 80 Gew.-%
• C₄(AₓF₁₋ₓ)₃$ 5 bis 70 Gew.-%
• Nebenphasen 0 bis 30 Gew.-%
wobei x eine Zahl von 0,1 bis 1 ist, abkühlt.

2. Ternesit-Calciumsulfoaluminat-Klinker oder Zement gemäß Anspruch 1, **dadurch gekennzeichnet, dass** man das Klinkerzwischenprodukt in dem Temperaturbereich von 1200 °C bis zu einer unteren Grenze von 750 °C über eine Zeit tempert, die ausreicht, um mindestnes 10 Gew.-%, vorzugsweise mindestens 20 Gew.-% C₅S₂$ zu erhalten.

3. Bindemittel enthaltend einen gemahlenen Ternesit-Calciumsulfoaluminat-Klinker gemäß Anspruch 1 oder 2 oder einen gemahlenen Ternesit-Klinker mit einem Gehalt an C₅S₂$ im Bereich von 20 bis 100 Gew.-% und einem Gehalt an C₄(AₓF₍₁₋ₓ₎)₃$ unter 15 Gew.-%, jeweils bezogen auf das Gesamtgewicht des Klinkers, und den weiteren Klinkerphasen (α; β) C₂S, C₄(AₓF(₁₋ₓ₎)₃$ mit x von 0,1 bis 1,0, C₂(A_{y}F_{(1-y)}) mit y von 0,2 bis 0,8, reaktive Aluminate, Periklas (M) und Nebenphasen in folgenden Anteilen:
• (α, β) C₂S 0 bis 80 Gew.-%
• C₄(AₓF₍₁₋ₓ₎)₃$ 0 bis < 15 Gew.-%
• C₂(A_{y}F_{(1-y)}) 0 bis 30 Gew.-%
• Reaktive Aluminate 0 bis 20 Gew.-%
• Periklas (M) 0 bis 25 Gew.-%
• Nebenphasen 0 bis 30 Gew.-%
wobei sich die Anteile der Klinkerphasen zu 100 % addieren, und einen gemahlenen Calciumsulfoaluminat-Klinker.

4. Bindemittel gemäß Anspruch 3, **dadurch gekennzeichnet, dass** es den Calciumsulfoaluminat-Klinker in einer Menge im Bereich von 10 bis 90 Gew.-%, vorzugsweise von 20 bis 70 Gew.-% und den Ternesit-Klinker in einer Menge im Bereich von 10 bis 90 Gew.-%, vorzugsweise von 30 bis 80 Gew.-% enthält, wobei sich alle Anteile des Bindemittels zu 100 % addieren.

5. Bindemittel gemäß Anspruch 3 oder 4, **dadurch gekennzeichnet, dass** latent hydraulische Materialien und/oder Puzzolane in einem Bereich von 5 bis 80 Gew.-%, vorzugsweise von 20 bis 60 Gew.-% enthalten sind.

6. Bindemittel gemäß Anspruch 5, **dadurch gekennzeichnet, dass** die latent hydraulischen Materialien und/oder Puzzolane ausgewählt sind unter getemperten Tonen (z.B. Metakaolin), Schiefer, Flugaschen, Hüttensanden sowie künstlichen, z.B. puzzolanischen und latent hydraulischen, Gläsern.

7. Bindemittel gemäß mindestens einem der Ansprüche 3 bis 6, **dadurch gekennzeichnet, dass** es zusätzlich weitere hydraulisch reaktive Materialien, wie Portlandzement und/oder nicht hydraulisch reaktive Materialien, wie gemahlenen Kalkstein / Dolomit, gefälltes CaCO₃, Ca(OH)₂, Mg(OH)₂, Silica fume in einem Bereich von 1 bis 30 Gew.-%, vorzugsweise von 5 bis 20 Gew.-% enthält.

8. Bindemittel gemäß mindestens einem der Ansprüche 3 bis 7, **dadurch gekennzeichnet, dass** es als Zusatzmittel einen oder mehrere Abbinde- und / oder Erhärtungsbeschleuniger, vorzugsweise ausgewählt unter Komponenten mit verfügbarem Aluminium, die in Kontakt mit Wasser Aluminium, zum Beispiel in der Form von Al(OH)₄⁻ oder amorphes Al(OH)₃-Gel, freisetzen, wie lösliche Alkali-Aluminate [z.B. Na₂Al₂O₄, K₂Al₂O₄, etc.], Aluminiumhydroxid (z.B. amorphes Al(OH)₃), Calciumaluminatzement und / oder Geopolymer Binder in einer Menge im Bereich von 0,1 bis 15 Gew.-%, vorzugsweise von 1 bis 8 Gew.-% enthält.

9. Bindemittel gemäß mindestens einem der Ansprüche 3 bis 8, **dadurch gekennzeichnet, dass** es als Zusatzmittel Lithiumsalze und -hydroxide und/oder andere Alkalisalze und -hydroxide und Alkalisilikate enthält, wobei Zusatzmittel, wie zum Beispiel Alkalisalze, -silikate und -hydroxide, welche den pH-Wert der Lösung und damit einhergehend die Reaktivität von C₅S₂$ erhöhen, besonders bevorzugt sind.

10. Bindemittel gemäß einem der Ansprüche 3 bis 9, **dadurch gekennzeichnet, dass** der Ternesit-Klinker und der Calciumsulfoaluminat-Klinker gemeinsam oder getrennt, mit oder ohne Sulfatträger in Form von Alkali- und / oder Erdalkalisulfaten, vorzugsweise in Form von Gips und / oder Halbhydrat und / oder Anhydrit und / oder Magnesiumsulfat, auf Feinheiten (nach Blaine) im Bereich von 2000 bis 10000 cm²/g, vorzugsweise im Bereich von 3000 bis 6000 cm²/g und besonders bevorzugt von 4000 bis 5000 cm²/g gemahlen werden.

11. Bindemittel gemäß einem der Ansprüche 3 bis 9, **dadurch gekennzeichnet, dass** der Ternesit-Calciumsulfoaluminat-Klinker mit oder ohne Sulfatträger in Form von Alkali- und / oder Erdalkalisulfaten, vorzugsweise in Form von Gips und / oder Halbhydrat und / oder Anhydrit und / oder Magnesiumsulfat, auf Feinheiten (nach Blaine) im Bereich von 2000 bis 10000 cm²/g, vorzugsweise im Bereich von 3000 bis 6000 cm²/g und besonders bevorzugt von 4000 bis 5000 cm²/g gemahlen wird.

12. Bindemittel gemäß Anspruch 11 oder 12, **dadurch gekennzeichnet, dass** der Ternesit-Zement eine Partikelgrößenverteilung mit einem d₅₀ kleiner 20 µm und d₉₀ kleiner 100 µm, oder einem d₅₀ kleiner 5 µm und einem d₉₀ kleiner 20 µm oder mit einem d₅₀ kleiner 0,1 µm und einem d₉₀ kleiner 2 µm aufweist.

13. Verwendung eines Bindemittels gemäß einem der Ansprüche 3 bis 12 in Kombination mit Gesteinskörnungen zur Herstellung von Beton und Mörtel, wobei ein Wasser/Bindemittelwert von 0,2 bis 2 eingestellt wird.

14. Verwendung eines Bindemittels gemäß einem der Ansprüche 3 bis 12 zur Immobilisierung von Schadstoffen oder als Dichtwandmasse, wobei vorzugsweise adsorptiv wirksame Zusätze wie Zeolithe und/oder lonenaustauscherharze, zugefügt werden.

15. Verwendung eines Ternesit-Klinkers mit einem Gehalt an C₅S₂$ im Bereich von 20 bis 100 Gew.-% und einem Gehalt an C₄(AₓF₍₁₋ₓ₎)₃$ unter 15 Gew.-%, jeweils bezogen auf das Gesamtgewicht des Klinkers, und den weiteren Klinkerphasen (α; β) C₂S, C₄(AₓF₍₁₋ₓ₎)₃$ mit x von 0,1 bis 1,0, C₂(A_{y}F_{(1-y)}) mit y von 0,2 bis 0,8, reaktive Aluminate, Periklas (M) und Nebenphasen in folgenden Anteilen:
• (α, β) C₂S 0 bis 80 Gew.-%
• C₄(AₓF₍₁₋ₓ₎)₃$ 0 bis < 15 Gew.-%
• C₂(A_{y}F_{(1-y)}) 0 bis 30 Gew.-%
• Reaktive Aluminate 0 bis 20 Gew.-%
• Periklas (M) 0 bis 25 Gew.-%
• Nebenphasen 0 bis 30 Gew.-%
wobei sich die Anteile der Klinkerphasen zu 100 % addieren als Additiv zu Calciumsulfoaluminatbindemittel, **dadurch gekennzeichnet, dass** der Ternesit-Klinker mit dem Calciumsulfoaluminat-Klinker gemischt und beide gemeinsam, ggfs. unter Zusatz weiterer Komponenten, zu Zement gemahlen werden oder der gemahlene Ternesit-Klinker mit Calciumsulfoaluminatzement, ggfs. unter Zusatz weiterer Komponenten, zu dem Bindemittel vermischt werden.

## Claims

1. A ternesite calcium sulfoaluminate clinker or cement obtainable by sintering a raw meal mixture, which contains sources for CaO, Al₂O₃(Fe₂O₃), SiO₂ and SO₃, **characterized in that**
the raw meal mixture is sintered in a temperature range of > 1200°C to 1350°C over a period of time sufficient to convert the raw meal mixture into a clinker intermediate product, typically 10 to 240 minutes
the clinker intermediate product is tempered in a temperature range of from 1200°C to a lower limit of 750°C over a period of time sufficient to obtain the desired amount of C₅S₂$ and to convert aluminate and ferrate phases and residues of the crystalline high-temperature phases of the raw materials with remaining C$ into additional C₄(AₓF₁₋ₓ)₃$ and C₅S₂$, typically 15 to 300 minutes, and the clinker comprising the main components C₄(AₓF₁₋ₓ)₃$, (α; β) C₂S and C₅S₂$ in the following proportions
• C₅S₂$ 5 to 75 wt %
• C₂S 1 to 80 wt %
• C₄(A_{X}F₁₋ₓ)₃$ 5 to 70 wt %
• secondary phases 0 to 30 wt %,
wherein x is a number from 0.1 to 1, is cooled.

2. The ternesite calcium sulfoaluminate clinker or cement according to claim 1, **characterized in that** the clinker intermediate product is tempered in the temperature range of from 1200°C to a lower limit of 750°C over a period of time sufficient to obtain at least 10 % by weight, preferably at least 20 % by weight of C₅S₂$.

3. A binder containing a ground ternesite calcium sulfoaluminate clinker according to claim 1 or 2 or a ground ternesite clinker with a content of C₅S₂$ in the range of 20 to 100 % by weight and a content of C₄(AₓF₁₋ₓ)₃$ below 15 % by weight, in each case based on the total weight of the clinker, and the further clinker phases (α; β) C₂S, C₄(AₓF₍₁₋ₓ₎)₃$, where x is from 0.1 to 1.0, C₂(A_{y}F_{(1-y)}), where y is from 0.2 to 0.8, reactive aluminates, periclase (M) and secondary phases in the following proportions:
• (α, β) C₂S 0 to 80 % by weight
• C₄(AₓF₍₁₋ₓ₎)₃$ 0 to < 15 % by weight
• C₂(A_{y}F_{(1-y)}) 0 to 30 % by weight
• reactive aluminates 0 to 20 % by weight
• periclase (M) 0 to 25 % by weight
• secondary phases 0 to 30 % by weight,
wherein the proportions of the clinker phases add up to 100 %, and a ground calcium sulfoaluminate clinker

4. The binder according to claim 3, **characterized in that** it contains the calcium sulfoaluminate clinker in an amount in the range of 10 to 90 % by weight, preferably 20 to 70 % by weight and the ternesite clinker in an amount in the range of 10 to 90 % by weight, preferably 30 to 80 % by weight, wherein all components of the binder add up to 100 %.

5. The binder according to claim 3 or 4, **characterized in that** latent hydraulic materials and/or pozzolanes are contained in a range of 5 to 80 % by weight, preferably of 20 to 60 % by weight.

6. The binder according to claim 5, **characterized in that** the latent hydraulic materials and/or pozzolanes are selected from tempered clays (for example metakaolin), shale, fly ashes, ground granulated blast furnace slags, as well as synthetic, for example pozzolanic and latent hydraulic, glasses.

7. The binder according to at least one of claims 3 to 6, **characterized in that** it additionally contains further hydraulically reactive materials, such as Portland cement and/or not hydraulically reactive materials, such as ground limestone / dolomite, precipitated CaCO₃, Ca(OH)₂, Mg(OH)₂, silica fume in a range from 1 to 30 % by weight, preferably from 5 to 20 % by weight.

8. The binder according to at least one of claims 3 to 7, **characterized in that** it contains one or more setting and/or hardening accelerators as an admixture, preferably selected among components having available aluminum, which in contact with water liberate aluminum, for example in the form of Al(OH)₄⁻ or amorphous Al(OH)₃ gel, such as soluble alkali aluminates [for example Na₂Al₂O₄, K₂Al₂O₄, and the like], amorphous aluminum hydroxide (for example Al(OH)₃), calcium aluminate cement and/or geopolymer binder in an amount in the range of 0.1 to 15 % by weight, preferably of 1 to 8 % by weight.

9. The binder according to at least one of claims 3 to 8, **characterized in that** it contains lithium salts and lithium hydroxides and/or other alkali salts and alkali hydroxides and alkali silicates as an admixture, wherein admixtures such as alkali salts, alkali silicates and alkali hydroxides, which increase the pH value of the solution and therefore also the reactivity of C₅S₂$, are particularly preferred.

10. The binder according to at least one of claims 3 to 9, **characterized in that** the ternesite clinker and the calcium sulfoaluminate clinker are ground together or separately to degrees of fineness (according to Blaine) in the range of 2000 to 10000 cm²/g, preferably in the range of 3000 to 6000 cm²/g and more preferably of 4000 to 5000 cm²/g, either with or without sulfate carriers in the form of alkaline and/or alkaline earth sulfates, preferably in the form of gypsum and/or hemihydrate and/or anhydrite and/or magnesium sulfate.

11. The binder according to at least one of claims 3 to 9, **characterized in that** the ternesite calcium sulfoaluminate clinker is ground to degrees of fineness (according to Blaine) in the range of 2000 to 10000 cm²/g, preferably in the range of 3000 to 6000 cm²/g and more preferably of 4000 to 5000 cm²/g, either with or without sulfate carriers in the form of alkaline and/or alkaline earth sulfates, preferably in the form of gypsum and/or hemihydrate and/or anhydrite and/or magnesium sulfate.

12. The binder according to claim 11 or 12, **characterized in that** the ternesite cement has a particle size distribution with a d₅₀ of less than 20 µm and d₉₀ less than 100 µm, or d₅₀ less than 5 µm and d₉₀ less than 20 µm, or d₅₀ less than 0.1 µm and d₉₀ less than 2 µm.

13. The use of a binder according to one of claims 3 to 12 in combination with mineral aggregates to produce concrete and mortar, wherein a water/binder value of 0.2 to 2 is set.

14. The use of a binder according to one of claims 3 to 12 for immobilizing pollutants or as a sealing wall mass, wherein adsorptively effective additives such as zeolites and/or ion-exchange resins are preferably added.

15. The use of a ternesite clinker with a content of C₅S₂$ in the range of 20 to 100 % by weight and a content of C₄(AₓF₁₋ₓ)₃$ below 15 % by weight, in each case based on the total weight of the clinker, and the further clinker phases (α; β) C₂S, C₄(AₓF₍₁₋ₓ₎)₃$, where x is from 0.1 to 1.0, C₂(A_{y}F_{(1-y)}), where y is from 0.2 to 0.8, reactive aluminates, periclase (M) and secondary phases in the following proportions:
• (α, β) C₂S 0 to 80 % by weight
• C₄(AₓF₍₁₋ₓ₎)₃$ 0 to < 15 % by weight
• C₂(A_{y}F_{(1-y)}) 0 to 30 % by weight
• reactive aluminates 0 to 20 % by weight
• periclase (M) 0 to 25 % by weight
• secondary phases 0 to 30 % by weight,
wherein the proportions of the clinker phases add up to 100 % as an additive to calcium sulfoaluminate binders, **characterized in that** the ternesite clinker is mixed with the calcium sulfoaluminate clinker, and the two together, possibly with the addition of other components, are ground to form a cement, or the ground ternesite clinker with calcium sulfoaluminate cement, possibly with the addition of other components, are mixed to form the binder.

## Revendications

1. Clinker ou ciment à base de ternésite/sulfoaluminate de calcium, pouvant être obtenu par frittage d'un mélange cru pulvérulent contenant des source de CaO, Al₂O₃(Fe₂O₃), SiO₂ et de SO₃,
**caractérisé en ce que**
le mélange cru pulvérulent est soumis à un frittage dans une fourchette de températures allant de > 1200°C à 1350°C, durant une période suffisamment longue, typiquement durant 10 à 240 min, pour transformer le mélange cru pulvérulent en un produit intermédiaire clinkérisé.
le produit intermédiaire clinkérisé est soumis à un traitement thermique dans une fourchette de températures commençant à 1200°C pour atteindre une limite inférieure de 750°C durant une période suffisamment longue, typiquement durant 15 à 300 min, pour obtenir la quantité souhaitée de C₅S₂$ ainsi que pour faire réagir des phases d'aluminate et de ferrate, et des phases cristallines résiduelles, que les matières premières présentent à haute température, au moins partiellement avec du C$ disponible et obtenir ainsi du C₄(AₓF₁₋ₓ)₃$ et du C₅S₂$ supplémentaires, et
le clinker ayant comme constituants principaux le C₄(AₓF₁₋ₓ)₃$, le (α; β) C₂S et le C₅S₂$ dans les proportions suivantes
• C₅S₂$ 5 à 75 % en poids
• C₂S 1 à 80 % en poids
• C₄(AₓF₁₋ₓ)₃$ 5 à 70 % en poids
• phases secondaires 0 à 30 % en poids
x étant un nombre compris entre 0,1 et 1, est soumis a un refroidissement.

2. Clinker ou ciment à base de ternésite / sulfoaluminate de calcium selon la revendication 1, **caractérisé en ce que** le produit intermédiaire clinkérisé est soumis à un traitement thermique dans la fourchette de températures commençant à 1200°C pour atteindre une limite inférieure de 750°C durant une période suffisamment longue pour obtenir au moins 10 % en poids, de préférence au moins 20 % en poids, de C₅S₂$.

3. Liant contenant un clinker pulvérulent à base de ternésite / sulfoaluminate de calcium selon les revendications 1 ou 2 ou un clinker pulvérulent à base de ternésite ayant une teneur en C₅S₂$ comprise entre 20 et 100 % en poids et une teneur en C₄(AₓF₁₋ₓ)₃$ inférieure à 15 % en poids, toujours par rapport au poids total dudit clinker, les proportions des autres phases de clinker, à savoir le (α; β) C₂S, le C₄(AₓF₍₁₋ₓ₎)₃$ avec x compris entre 0,1 et 1,0, le C₂(A_{y}F_{(1-y)}) avec y compris entre 0,2 et 0,8, les aluminates réactifs, la périclase (M) et les phases secondaires, étant comme suit :
• (α, β) C₂S 0 à 80 % en poids
• C₄(AₓF₍₁₋ₓ₎)₃$ 0 à < 15 % en poids
• C₂(A_{y}F_{(1-y)}) 0 à 30 % en poids
• aluminates réactifs 0 à 20 % en poids
• périclase (M) 0 à 25 % en poids
• phases secondaires 0 à 30 % en poids
la somme des proportions des phases de clinker étant égale à 100 %, et un clinker pulvérulent à base de sulfoaluminate de calcium.

4. Liant selon la revendication 3, **caractérisé en ce qu'**il contient le clinker à base de sulfoaluminate de calcium dans une quantité comprise entre 10 et 90 % en poids, de préférence entre 20 et 70 % en poids, et le clinker à base de ternésite dans une quantité comprise entre 10 et 90 % en poids, de préférence entre 30 et 80 % en poids, la somme de l'ensemble des proportions dudit liant étant égale à 100%.

5. Liant selon les revendications 3 ou 4, **caractérisé en ce qu'**il contient des matériaux à action hydraulique latente et/ou des pouzzolanes, de l'ordre de 5 à 80 % en poids, préférentiellement de 20 à 60 % en poids.

6. Liant selon la revendication 5, **caractérisé en ce que** les matériaux à action hydraulique latente et/ou les pouzzolanes sont choisis parmi les argiles ayant subi un traitement thermique (par exemple, le métakaolin), le schiste, les cendres volantes, les laitiers granulés de haut-fourneau ainsi que les verres artificiels, par exemple de type pouzzolane ou ayant une action hydraulique latente.

7. Liant selon au moins une des revendications 3 à 6, **caractérisé en ce qu'**il contient, en outre, d'autres matériaux à réaction hydraulique, comme le ciment Portland, et/ou des matériaux dépourvus de réaction hydraulique, comme le calcaire / la dolomite pulvérulent(e), le CaCO₃ précipité, le Ca(OH)₂, le Mg(OH)₂, la fumée de silice, de l'ordre de 1 à 30 % en poids, préférentiellement de 5 à 20 % en poids.

8. Liant selon au moins une des revendications 3 à 7, **caractérisé en ce qu'**il contient, en tant qu'adjuvants, un ou plusieurs agents accélérateurs de prise et/ou de durcissement qui sont préférentiellement choisis parmi les constituants comportant de l'aluminium disponible et libérant, au contact avec l'eau, de l'aluminium par exemple sous forme de Al(OH)₄⁻ ou de gel amorphe de Al(OH)₃, comme les aluminates alcalins solubles [par exemple, le Na₂Al₂O₄, le K₂Al₂O₄, etc.], l'hydroxyde d'aluminium (par exemple, le Al(OH)₃ amorphe), le ciment d'aluminate de calcium et/ou le liant géopolymère, dans une quantité comprise entre 0,1 et 15 % en poids, de préférence entre 1 et 8 % en poids.

9. Liant selon au moins une des revendications 3 à 8, **caractérisé en ce qu'**il contient, en tant qu'adjuvants, des sels et hydroxydes de lithium et/ou d'autres sels et hydroxydes alcalins et des silicates alcalins, les adjuvants capables d'augmenter le pH de la solution et ainsi la réactivité de C₅S₂$ étant particulièrement préférés, s'agissant par exemple de sels, silicates et hydroxydes alcalins.

10. Liant selon l'une des revendications 3 à 9, **caractérisé en ce que** le clinker à base de ternésite et le clinker à base de sulfoaluminate de calcium sont transformés en poudre ensemble ou séparément, avec ou sans support sulfaté se présentant sous forme de sulfates alcalins et/ou alcalino-terreux, de préférence sous forme de gypse et/ou d'hémi-hydrate et / ou d'anhydrite et / ou de sulfate de magnésium, de manière à atteindre une finesse (selon Blaine) qui est comprise entre 2000 et 10000 cm²/g, préférentiellement comprise entre 3000 et 6000 cm²/g et, avec une préférence particulière, entre 4000 et 5000 cm²/g.

11. Liant selon l'une des revendications 3 à 9, **caractérisé en ce que** le clinker à base de ternésite / sulfoaluminate de calcium est transformé en poudre, avec ou sans support sulfaté se présentant sous forme de sulfates alcalins et/ou alcalino-terreux, de préférence sous forme de gypse et/ou d'hémi-hydrate et / ou d'anhydrite et / ou de sulfate de magnésium, de manière à atteindre une finesse (selon Blaine) qui est comprise entre 2000 et 10000 cm²/g, préférentiellement comprise entre 3000 et 6000 cm²/g et, avec une préférence particulière, entre 4000 et 5000 cm²/g.

12. Liant selon les revendications 11 ou 12, **caractérisé en ce que** le ciment à base de ternésite présente une granulométrie telle que le d₅₀ est inférieur à 20 µm et le d₉₀ est inférieur à 100 µm, ou bien que le d₅₀ est inférieur à 5 µm et le d₉₀ est inférieur à 20 µm ou bien que le d₅₀ est inférieur à 0,1 µm et le d₉₀ est inférieur à 2 µm.

13. Utilisation d'un liant selon l'une des revendications 3 à 12, en association avec des granulats, pour fabriquer du béton et du mortier, le rapport eau/liant étant ajusté à une valeur comprise entre 0,2 et 2.

14. Utilisation d'un liant selon l'une des revendications 3 à 12 pour immobiliser des polluants, ou en tant que masse pour parois d'étanchéité, en y ajoutant préférentiellement des additifs à action adsorbante tels que les zéolithes et/ou les résines d'échangeuses d'ions.

15. Utilisation du clinker à base de ternésite ayant une teneur en C₅S₂$ comprise entre 20 et 100 % en poids et une teneur en C₄(AₓF₁₋ₓ)₃$ inférieure à 15 % en poids, toujours par rapport au poids total dudit clinker, les proportions des autres phases de clinker, à savoir le (α; β) C₂S, le C₄(AₓF₍₁₋ₓ₎)₃$ avec x compris entre 0,1 et 1,0, le C₂(A_{y}F_{(1-y)}) avec y compris entre 0,2 et 0,8, les aluminates réactifs, la périclase (M) et les phases secondaires, étant comme suit :
• (α, β) C₂S 0 à 80 % en poids
• C₄(AₓF₍₁₋ₓ₎)₃$ 0 à < 15 % en poids
• C₂(A_{y}F₍₁-_{y)}) 0 à 30 % en poids
• aluminates réactifs 0 à 20 % en poids
• périclase (M) 0 à 25 % en poids
• phases secondaires 0 à 30 % en poids
la somme des proportions des phases de clinker étant égale à 100 % consistant à l'ajouter à un liant à base de sulfoaluminate de calcium, **caractérisée en ce que** l'on mélange le clinker à base de ternésite avec le clinker à base de sulfoaluminate de calcium pour les transformer ensemble, le cas échéant après l'ajout d'autres constituants, en ciment pulvérulent ou l'on mélange le clinker pulvérulent à base de ternésite avec le ciment à base de sulfoaluminate de calcium, le cas échéant après l'ajout d'autres constituants, pour ainsi obtenir ledit liant.
